(19) Europäisches Patentamt
European Patent Office
Office européen des brevets

(11) **EP 4 787 300 A1**

(12) **EUROPEAN PATENT APPLICATION**

(43) Date of publication:
**05.08.2026 Bulletin 2026/32**

(21) Application number: **26154952.1**

(22) Date of filing: **29.01.2026**

(51) International Patent Classification (IPC):
**G06T 7/00** $^{(2017.01)}$

(52) Cooperative Patent Classification (CPC):
**G06T 7/0012;** G06T 2200/04; G06T 2207/10081;
G06T 2207/30036

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.02.2025 DK PA202570012
28.02.2025 EP 25161055
23.05.2025 EP 25178539**

(71) Applicant: **3Shape A/S
1060 Copenhagen K (DK)**

(72) Inventors:
• **ALALOUF, Daniella
1060 Copenhagen K (DK)**

• **HUSEINI, Admir
1060 Copenhagen K (DK)**
• **CEBOV, Aleksandar
1060 Copenhagen K (DK)**
• **GHOLAMALIZADEH, Torkan
1060 Copenhagen K (DK)**
• **SCHOBER, Daniel
1060 Copenhagen K (DK)**
• **KURALT, Marko
1060 Copenhagen K (DK)**
• **FENOY, Laura Montesdeoca
1060 Copenhagen K (DK)**
• **VANNAHME, Christoph
1060 Copenhagen K (DK)**

(74) Representative: **Zacco Denmark A/S
Arne Jacobsens Allé 15
2300 Copenhagen S (DK)**

(54) **INTRAORAL SCAN AND X-RAY SYSTEM**

(57) Disclosed is a computer-implemented method comprising the steps of obtaining first data representing a surface of a dental object, wherein the first data is three-dimensional (3D) surface data; obtaining first augmentation data indicating an estimated presence of a second set of dental conditions in the second data; obtaining second data representing an internal volume of the dental object; obtaining second augmentation data indicating an estimated presence of a second set of dental conditions in the second data; obtaining a user input indicative of a desired inspection site of the dental object; determining a part of the first data corresponding to the desired inspection site; determining a part of the second data corresponding to the desired inspection site; rendering, in a graphical-user interface (GUI), a first view comprising the part of the first data corresponding to the desired inspection site and rendering with a visual indication of at least a part of the first augmentation data corresponding to the desired inspection site; and rendering, in the GUI, a second view comprising the part of the second data corresponding to the desired inspection site with a visual indication of at least a part of the second augmentation data corresponding to the desired inspection site.

Fig. 5a

**Description**

**Technical field**

The disclosure relates to a computer-implemented method for improved comparison of data representing a surface of a dental object with data representing an internal volume of the dental object. The disclosure further relates to a system for improved comparison of data representing a surface of the dental object with data representing an internal volume of the dental object.

**Background**

For dentists and other dental practitioners, having information about the internal structure of their patient's teeth is a key element in making a proper diagnosis and treatment plan for several dental conditions. This is partially the reason why one of the first practical uses of x-ray imaging was for imaging human teeth. However, internal information never tells the full story of the patient's oral health status. Therefore, dentists and other dental practitioners often need to supplement x-ray information with visual and mechanical inspections of the surfaces of the patient's oral cavity.

For gathering surface information on dental objects, intraoral scanning technology has proven to be a valuable addition to the dentist's tool kit. Traditionally, dental impressions were taken using physical molds, where materials such as alginate or silicone were inserted into a patient's mouth to create negative impressions. These molds were then sent to a laboratory to be processed, a method that was not only time-consuming but also prone to errors due to material shrinkage, distortions, or improper handling. The development of intraoral scanning systems offers a digital alternative that significantly enhances accuracy, speed, and patient comfort.

By utilizing optical imaging technology, intraoral scanners capture two-dimensional (2D) images of a patient's teeth and surrounding structures from which a digital three-dimensional (3D) representation of the patient's dentition can be created. This digital 3D representation can then be used for a variety of applications, such as designing crowns, bridges, inlays, veneers and so forth, dental implants, aligners, and for diagnostic purposes in orthodontics and prosthodontics, or for diagnostic purposes of early signs of carries, plaque, gingival recession, etc.

For all their respective benefits, neither surface data nor sub-surface data alone can provide the entire picture of a given patient's dental health condition, as they are complementary pieces of the same puzzle. It is therefore desirable to provide improved means for assessing and comparing the two, so that the dental practitioner can be continually guided in their effort to treat and advise their patients.

**Summary**

A first aspect of the present disclosure is to provide a computer-implemented method comprising the steps of obtaining first data representing a surface of a dental object, wherein the first data is three-dimensional (3D) surface data; obtaining first augmentation data indicating an estimated presence of a first set of dental conditions in the first data; obtaining second data representing an internal volume of the dental object; obtaining second augmentation data indicating an estimated presence of a second set of dental conditions in the second data; obtaining a user input indicative of a desired inspection site of the dental object; determining a part of the first data corresponding to the desired inspection site; determining a part of the second data corresponding to the desired inspection site; rendering, in a graphical-user interface (GUI), a first view comprising the part of the first data corresponding to the desired inspection site with a visual representation of at least a part of the first augmentation data corresponding to the desired inspection site; and rendering, in the GUI, a second view comprising the part of the second data corresponding to the desired inspection site with a visual representation of at least a part of the second augmentation data corresponding to the desired inspection site.

The desired inspection site may be any part or region of the dental object which the dental practitioner may want and/or need to inspect closely. By providing a GUI wherein both the information on the surface of the desired inspection site of the dental object and the information on the internal volume of the desired inspection site of the dental object is displayed, the dental practitioner is given improved tools for simultaneously inspecting and comparing surface and sub-surface data, whereby they may more efficiently identify possible problem areas in the dental object. Furthermore, by spatially correlating and by synchronizing the views of the surface and the internal volume at the desired inspection site the dental practitioner may simultaneously view and compare surface and sub-surface information about the health status of the desired inspection site. In this way, the dental practitioner is given a visual guide which assists them in examining the patient's dental object, by providing them with a comprehensive assessment of the condition of the dental object.

The second data may be one or more two-dimensional (2D) images of the dental object. Advantageously, 2D images of the dental object can be easily acquired by means of imaging technologies accessible in most dental clinics.

The one or more 2D images may be based on illuminating the dental object using light in the x-ray domain. X-ray machines configured to capture 2D x-ray images of the dental object are widely available, even in small dental clinics.

Thus, 2D x-ray images may be captured by the dental practitioner even during a standard dental visit of the patient without the need for the patient to visit another specific clinic before the dental visit, enabling dental practitioner to quickly obtain information about the patient's oral health. In general, 2D x-ray images may be captured using an imaging device different than the one used to obtain the first data, i.e. the 3D surface data.

Alternatively, the one or more 2D images may be based on illuminating the dental object using light in the infrared domain. Infrared images may provide the dental practitioner with information about the region between enamel and dentin of the dental object, which may help the dental practitioner to detect dental conditions such as proximal caries in early stages without the need for invasive dental procedures. Infrared images of the dental object may be obtained by means of an intraoral scanner configured to illuminate the dental object with light in the infrared domain. Advantageously, the intraoral scanner may be the same as the one used to acquire the first 3D surface data of the dental object. While infrared images may be effective for detecting early enamel lesions and/or cracks, they may not be as effective as X-ray images for determining sub-surface hard structures such as bone loss, deep cavities and the depth of a lesion in the dentin.

The second data may further or alternatively be 3D data. The 3D data may provide more detailed internal volume information about the dental object compared to 2D data. Furthermore, the use of 3D internal volume data may simplify the visual comparison between the 3D surface data and the 3D internal volume for the dental practitioner.

The 3D data may be one or more 3D Cone Beam Computed Tomography (CBCT) images of the dental object. CBCT images provide the dental practitioner with accurate information about bone density, and said images further enable dental practitioners to detect hidden structures, such as hidden root canals, which may not be visible on standard 2D x-ray images.

The first augmentation data may further comprise a severity level of each dental condition comprised in the first set of dental conditions. The second augmentation data may further comprise a severity level of each dental condition in the second set of dental conditions. Each severity level provides an estimation of the stage of development of the corresponding dental condition. Therefore, the augmentation data may be used to determine a stage of development of the dental conditions in the first set of dental conditions and/or the stage of development of the dental conditions in the second set of dental conditions, enabling the dental practitioner to make a well-rounded assessment of the health status of the dental object.

The severity level of each dental condition may be associated with a number on a predefined scale of severity of the corresponding dental condition. Therefore, the severity level provides a quantitative indication of the stage of development of the corresponding dental condition.

The severity level of each dental condition may be based on one or more clinical aspects of the corresponding dental condition. Therefore, the severity level is defined by considering specific clinical aspects of the dental conditions, e.g. the rate of development of the dental condition, the contagiousness level of the dental conditions and so forth, making the severity level an accurate indication of the stage of development of each condition.

The first set of dental conditions may comprise one or more of caries, plaque, tooth crack, gum recession, tooth wear and gum inflammation. Those are among the most common dental health conditions which can be detected at early stages of their development using surface data of the dental object. However, the first set of dental conditions may comprise any other dental condition which is not mentioned above, and which may be of interest in the examination process of the patient's dental object.

The second set of dental conditions may comprise one or more of proximal caries, calculus and/or periapical radiolucency. Those are among the most common dental conditions which can be detected at early stages of their development using internal volume data of the dental object. However, the second set of dental conditions may comprise any other underlying dental condition which is not mentioned above, and which may be of interest in the examination process of the patient's dental site. Therefore, the second set of dental conditions may comprise dental conditions different than the ones comprised in the first set of dental conditions. In particular, the second set of dental conditions may comprise dental conditions which may not be detected based on 3D surface data, but which may be detected by using the second data, e.g. one or more 2D X-ray images and/or one or more CBCT images.

The method may further comprise determining one or more dental conditions in the first set of dental conditions associated with the part of the first data corresponding to the desired inspection site. This may be done by using at least a part of the first augmentation data. Thus, local information about the health of the surface of the desired inspection site can be accurately determined.

The at least a part of the first augmentation data may comprise the one or more dental conditions in the first set of dental conditions associated with the part of the first data corresponding to the desired inspection site. In this way, a visual representation of the dental condition(s) in the first set of dental conditions affecting the desired inspection site may be provided to the dental practitioner. The visual representation may assist the dental practitioner in inspecting the health status of the surface of the desired inspection site. For example, the dental practitioner may detect, based on the visual representation, the presence of caries and plaque in the desired inspection site, and accordingly they may manually inspect the desired inspection site to gain further information about the site and eventually define a treatment plan.

The visual indication may be overlayed on the part of the first data corresponding to the desired inspection site. In this way, the dental practitioner is provided with a direct visualization of areas of concern in the part of the first data corresponding to the desired inspection site, i.e. areas affected by the one or more dental conditions, while maintaining the 3D scenario provided by the 3D surface data. This overlayed representation may therefore improve the user understating of the GUI.

The overlayed visual indication may comprise a color for each of the one or more dental conditions, and the color may be different than a different color of the part of the first data corresponding to the desired inspection site. For example, caries may be visualized with yellow, plaque with red, and gum recession with blue. Therefore, different dental conditions associated with the part of the first data corresponding to the desired inspection site may be easily distinguished by the dental practitioner through the different colors used to visualize them. Furthermore, a contrast is created between the rendering color of the part of the first data corresponding to the desired inspection site and the color representing each dental condition, enabling the user to quickly identify problem areas in the first view.

The overlayed visual indication may comprise a different pattern for each of the one or more dental conditions. For example, caries may be visualized with a spiral pattern, plaque may be visualized with a wave pattern, and gum recession may be visualized with dots. Therefore, different dental conditions associated with the part of the first data corresponding to the desired inspection site may be easily distinguished by the dental practitioner through the different patterns used to visualize them.

The visual indication of the at least a part of the first augmentation data may be displayed in the GUI upon detecting clicking and/or hovering on a rendering in the GUI of the part of the first data corresponding to the desired inspection site, and the visual indication may comprise a list of one or more dental conditions in the first set of dental conditions associated with the part of the first data corresponding to the desired inspection site. The user may need and/or want to compare the surface of the desired inspection site and the internal volume of the desired inspection site without any diagnostic indication displayed on the first view, e.g. to visualize the surface color and/or surface appearance of the desired inspection site.

The method may further comprise determining one or more dental conditions in the second set of dental conditions associated with the part of the second data corresponding to the desired inspection site. This may be done by using at least a part of the second augmentation data. Thus, local information about the health status of the internal volume of the desired inspection site can be accurately determined.

The at least a part of the second augmentation data may comprise the one or more dental conditions in the second set of dental conditions associated with the part of the second data corresponding to the desired inspection site. In this way, a visual representation of the dental condition(s) in the second set of dental conditions affecting the desired inspection site is provided to the dental practitioner. The visual representation may assist the dental practitioner in inspecting the health status of the internal volume of the desired inspection site. For example, the dental practitioner may detect, based on the visual representation, the presence of proximal caries and periapical radiolucency in the desired inspection site, and accordingly they may manually inspect the desired inspection site to gain further information about the site and eventually define a treatment plan.

The visual indication may be overlayed on the part of the second data corresponding to the desired inspection site. In this way, the dental practitioner is provided with a direct visualization of areas of concern in the part of the second data corresponding to the desired inspection site, i.e. areas affected by the one or more dental conditions, while maintaining the scenario provided by the second data. This overlayed representation may therefore improve the user understating of the GUI.

The overlayed visual indication may comprise a color for each of the one or more dental conditions, and the color may be different than a rendering color of the part of the second data corresponding to the desired inspection site. For example, proximal caries may be visualized with pink, calculus with green, and periapical radiolucency with purple. Therefore, different dental conditions associated with the part of the second data corresponding to the desired inspection site may be easily distinguished by the dental practitioner through the different colors used to visualize them. Furthermore, a contrast is created between the rendering color of the part of the second data corresponding to the desired inspection site and the color representing each dental condition, enabling the user to quickly identify problem areas in the second view.

The overlayed visual indication may comprise a different pattern for each of the one or more dental conditions. For example, proximal caries may be visualized with a line pattern, calculus may be visualized with a geometric triangular pattern, and periapical radiolucency may be visualized with a diamond pattern. Therefore, different dental conditions associated with the part of the second data corresponding to the desired inspection site may be easily distinguished by the dental practitioner through the different patterns used to visualize them.

The visual indication of the at least a part of the second augmentation data may be displayed in the GUI upon detecting clicking and/or hovering on a rendering in the GUI of the part of the second data corresponding to the desired inspection site, and the visual indication may comprise a list of one or more dental conditions in the second set of dental conditions associated with the part of the second data corresponding to the desired inspection site. The user may need or want to compare the surface of the desired inspection site and the internal volume of the desired inspection site without any diagnostic indication displayed on the second view.

The first augmentation data may further comprise segmented tooth surface data and segmented gingiva surface data. The segmented surface data is beneficial, since this may allow to distinguish between teeth and gingiva in the first data, and it may further allow to recognize and localize specific teeth in the first data. Advantageously, the segmented data may be used to determine the part of the first data corresponding to the desired inspection site. A further advantage is that the segmented data comprised in the first augmentation data may be used to determine a spatial relationship between the first data and the second data. Possible ways to segment the first 3D surface data will be discussed later in the detailed description of the present application.

The second augmentation data may further comprise segmented tooth volume data and segmented periodontal volume data. The segmented volume data is beneficial, since this may allow to distinguish between teeth and periodontal structures, and it may further allow to recognize and localize specific teeth in the second data. Advantageously, the segmented data may be used to determine the part of the second data corresponding to the desired inspection site. A further advantage is that the segmented data comprised in the second augmentation data may be used to determine a spatial relationship between the first data and the second data. Possible ways to segment the second data will be discussed later in the detailed description of the present application.

As mentioned above, one of the advantages of obtaining the first augmentation data and the second augmentation data is that the segmented data comprised in the first augmentation data and the segmented data comprised in the second augmentation data may be used to determine one or more parts of the second data which spatially correspond to one or more parts of the first data, and vice versa. In other words, at least part of the first augmentation data and at least part of the second augmentation data may be used to determine a spatial relationship between the 3D surface data and e.g. one or more 2D X-ray images and/or one or more CBCT images. This is particularly advantageous, since the first data, i.e. the 3D surface data, and the second data, i.e. the one or more 2D X-ray images and/or the one or more CBCT images, are generally obtained by using different imaging techniques and different imaging devices, such as an intraoral scanner and X-ray/CBCT machine, respectively. It is therefore advantageous to determine the correspondence/relationship in space between the first data and the second data, as said spatial correspondence/relationship may be used to automatically and accurately identify the parts of the first data and of the second data describing the same portion of the dental object. Once said spatial relationship is determined, it may be further exploited to synchronize the first view and the second view, such that both views display the same part of the dental object corresponding to the selected inspection site, and such that both views are updated, in real-time, every time a new inspection site is selected by the user.

At least a part of the first augmentation data may be obtained upon processing the first data using a trained model for each dental condition in the first set of dental conditions. Therefore, the presence of the first set of dental conditions in the first data may be automatically inferred, significantly speeding up and facilitating the diagnostic process. Further details about the trained model for each dental condition in the first set of dental conditions will be provided later in the detailed description of the present application.

The trained model for each dental condition in the first set of dental conditions may be configured to receive the first data as an input and to generate an output comprising a probability that the corresponding dental condition is present in the first data. The probability that a dental condition is present on the surface described by the first data may assist the dental practitioner in making an accurate diagnosis of the health of the surface of desired inspection site, and/or in making an informed decision on a treatment plan of the desired inspection site based on the output probability.

At least a part of the second augmentation data may be obtained upon processing the second data using a trained model for each dental condition in the second set of dental conditions. Therefore, the presence of the second set of dental conditions in the second data may be automatically inferred, significantly speeding up and facilitating the diagnostic process. Further details about the trained model for each dental condition in the second set of dental conditions will be provided later in the detailed description of the present application.

The trained model for each dental condition in the second set of dental condition may be configured to receive the second data as an input and to generate an output comprising a probability that the corresponding dental condition is present in the second data. The probability that a dental condition is present in the internal volume described by the second data may assist the dental practitioner in making an accurate diagnosis of the health of the internal volume of the desired inspection site, and/or in making an informed decision on a treatment plan of the desired inspection site based on the output probability.

The output of the trained model for each of the one or more dental conditions may further comprise a severity level of the corresponding dental condition. Therefore, the severity of each dental condition is quantified in an automated manner. In other words, the trained model for each dental condition automatically estimates the stage of development of the corresponding dental condition, therefore assisting the user in the examination process of the dental object.

At least a part of the first augmentation data and at least a part of the second augmentation data may be obtained upon processing the first data and the second data using a trained bimodal model. A single trained model may therefore be used to infer the presence of the first set of dental conditions and the second set of dental conditions in an automated manner. Advantageously, the use of the trained bimodal model may reduce the computational time of the method of the present disclosure and capture in a comprehensive way the relationships existing between the first data and the second data.

The trained bimodal model may be configured to receive the first data and the second data as an input and to generate an output comprising a probability that each dental condition in the first set of dental conditions is present in the dental object, the output further comprising a probability that each dental condition in the second set of dental conditions is present in the dental object. Thus, the trained bimodal model may output diagnostic predictions both for dental conditions affecting the surface of the dental object and for dental conditions affecting the internal volume of the dental object. Since surface and sub-surface dental conditions are complementary and influence each other, the trained bimodal model may provide the dental practitioner with a comprehensive view of the health status of the dental object.

The second augmentation data may further comprise segmented enamel data, segmented dentin data and segmented pulp data. This is advantageous, since it may allow to identify which part(s) of the internal volume of the dental object is affected by dental conditions, and/or to identify the degree of extent of the dental condition(s) in the internal volume of the dental object.

The first view and the second view may be displayed in a side-by-side view in the GUI. Therefore, the dental practitioner may access two sources of information about the health status of the dental object in a single GUI. Advantageously, the side-by-side view may assist the dental practitioner in the examination process of the dental object. For example, the practitioner may detect a caries lesion in the first view. To verify the degree of extent of the caries lesion in the internal volume of the desired inspection site, the practitioner may simply inspect the second view displayed in the side-by-side manner, without the need to switch from the first view to the second view. Similarly, the practitioner may start the inspection of the internal volume in the second view, and then look for the corresponding part on the surface of the dental object displayed side-by-side in the first view. Then, the user may proceed with the examination process by selecting another inspection site, such that a first view of the part of the first data corresponding to the new inspection site and a second view of the part of the second data corresponding to the new inspection site are displayed in a side-by-side view in the GUI. This ensures that the dental practitioner can easily and intuitively compare corresponding parts of the first data and of the second data, i.e. parts of the first data and of the first data which describe the same region of the dental object.

The second view may be overlayed or superimposed on the first view. The overlayed or superimposed view may enable the dental practitioner to visualize the part of the second data corresponding to the desired inspection site in a common 3D scene with the part of the first data corresponding to the desired inspection site, e.g. in a common 3D reference frame. In this way, the dental practitioner can immediately identify and compare corresponding parts of the dental objects for which information is available both in the first and in the second data. Advantageously, the overlayed or superimposed view assists the dental practitioner in the examination process of the dental object. For example, the dental practitioner may detect a caries lesion in the first view and, simultaneously, detect the internal volume counterpart of the caries lesion in the overlayed second view. As the need for switching between the first view and the second view is removed, the efficiency of the diagnostic process is enhanced, and the diagnostic process is sped up.

The first view may be overlayed or superimposed on the second view. The overlayed or superimposed view may enable the dental practitioner to visualize the part of the second data corresponding to the desired inspection site in a common scene with the part of the first data corresponding to the desired inspection site, e.g. in a common 2D panoramic view of the dental object. In this way, the dental practitioner can immediately identify and compare corresponding parts of the dental objects for which information is available both in the first and in the second data. Advantageously, the overlayed or superimposed view assists the dental practitioner in the examination process of the dental object. For example, the dental practitioner may detect a caries lesion in the second view and, simultaneously, detect the surface counterpart of the caries lesion in the overlayed second view. As the need for switching between the first view and the second view is removed, the efficiency of the diagnostic process is enhanced, and the diagnostic process is sped up.

The part of the first data corresponding to the desired inspection site may comprise a first part of a tooth, and the part of the second data corresponding to the desired inspection site may comprise a second part of the tooth. Therefore, the method disclosed herein enables the dental practitioner to compare complementary information relative to the same tooth of the patient.

The second part of the tooth may be encompassed in the first part of the tooth. This is advantageous as the second data may not comprise information describing the entire tooth, but rather the second data comprises information describing a part of the tooth. For example, the first data may comprise information about an occlusal, lingual and buccal part of the molar, whereas the second data may comprise information about a buccal part of the molar. In this case, the method described herein enables the dental practitioner to compare different pieces of information about the same part of the molar, i.e. information about the surface and the internal volume of the same molar.

The second part of the tooth may be the same as the first part of the tooth. Then the method described herein may enable the dental practitioner to inspect complementary information about the same tooth, e.g. information about surface and sub-surface dental conditions affecting the tooth, to make accurate an accurate diagnosis of the health status of the tooth.

The part of the first data corresponding to the desired inspection site may comprise a first part of a quadrant and the part of the second data corresponding to the desired inspection site may comprise a second part of the quadrant. The user may want and/or need to inspect the health status of a quadrant of the oral cavity of the patient, e.g. to inspect a possible presence of proximal caries between adjacent teeth in the quadrant.

The second part of the quadrant may be encompassed in the first part of the quadrant. This is advantageous when the second data comprises information describing only a part of the quadrant, e.g. the second data does not describe all the teeth in the quadrant. In other words, the method disclosed herein may require only a partial overlap between the part of the dental object described by the first data and the part of the dental object described by the second data. Then the method disclosed herein may enable the dental practitioner to inspect and compare complementary information relative to at least a part of the quadrant.

The first part of the quadrant may be the same as the second part of the quadrant. For example, this may be the case when the first data is a 3D model of the dental object, and the second data is a panoramic 2D x-ray image of the dental object. Then the method described herein may enable the dental practitioner to inspect complementary information about the same quadrant, e.g. information about surface and sub-surface dental conditions affecting the teeth and gingiva in the quadrant, to make accurate an accurate diagnosis of the health of the desired quadrant.

The part of the first data corresponding to the desired inspection site may comprise a first group of teeth, and the part of the second data corresponding to the desired inspection site may comprise a second group of teeth. The dental practitioner may need and/or want to inspect the health status of two teeth, or of three teeth, or four teeth and so forth, for example because some dental conditions may be spread across neighboring teeth or across teeth which are in an occlusal relationship. For example, an occlusal caries may spread from a mandibular tooth to the corresponding maxillary tooth. In another example, gum inflammation may cause receding gums and bone loss around a group of teeth. It is therefore an advantage of the present invention that the dental practitioner may select as the desired inspection site a group of teeth.

The second group of teeth may be encompassed in the first group of teeth. This is advantageous when the second data comprises information describing only a part of the first group of teeth, e.g. the second data does not describe all the teeth in the first group of teeth. In other words, the method described herein is suitable for determining corresponding parts between the first data and the second data, also when only a partial overlap exists between the part of the dental object described by the first data and the part of the dental object described by the second data. Then the method disclosed herein enables the dental practitioner to inspect and compare complementary information related to the selected group of teeth.

The first group of teeth may be the same as the second group of teeth. For example, this may be the case when the first data is a 3D model of the dental object, and the second data is a panoramic 2D x-ray image of the dental object. Then the method described herein may enable the dental practitioner to inspect complementary information about the same group of teeth, e.g. information about surface and sub-surface dental conditions affecting the teeth and gingiva in the group of teeth, to make accurate an accurate diagnosis of the health of the desired group of teeth.

The part of the first data corresponding to the desired inspection site may comprise a first part of a jaw, and the part of the second data corresponding to the inspection site comprises a second part of the jaw. The user may want and/or need to inspect the health status of a whole jaw, e.g. an upper jaw or a lower jaw. Some severe dental conditions may affect and spread through a whole jaw. Furthermore, the health status of the jaw may affect the way the patient speaks and chews.

The second part of the jaw may be encompassed in the first part of the jaw. This is advantageous when the second data comprises information describing only a part of the jaw, e.g. the second data does not describe all the teeth in the jaw. In other words, the method described herein is suitable for determining corresponding parts between the first data and the second data, also when only a partial overlap exists between the part of the dental object described by the first data and the part of the dental object described by the second data. Then the method disclosed herein enables the dental practitioner to inspect and compare complementary information related to the desired jaw.

The first part of the jaw may be the same as the second part of the jaw. For example, this may be the case when the first data is a 3D model of the dental object, and the second data is a panoramic 2D x-ray image of the dental object. Then the method described herein may enable the dental practitioner to inspect complementary information about the same jaw, e.g. information about surface and sub-surface dental conditions affecting the teeth and gingiva in the jaw, to make accurate an accurate diagnosis of the health of the desired jaw.

The first view and the second view may be bidirectionally synchronized based on a determined spatial relationship between at least a part of the first data and at least a part of the second data, whereby a user input indicative of an updated desired inspection site results in an updated first view and updated second view. Therefore, whenever the user selects a new desired inspection site of the dental object, the part of the first data corresponding to the desired inspection site and the part of the second data corresponding to the desired inspection site are determined, and the corresponding first view and second view are rendered in the GUI. In other words, the first view and the second view are correlated in such a way that a change in the first view results in a change in the second view, and vice versa, i.e. the synchronization is bidirectional. This is advantageous as it may be difficult for humans to properly correlate a position on a rendering of a 3D surface model to 2D images or 3D models of the internal volume, e.g. x-ray images or CBCT scan images. The synchronization between the first view and the second view may be achieved upon determining the spatial relationship between the at least part of the first data and the at least part of the second data, e.g. by computing and subsequently exploiting a registration matrix encoding for the spatial relationship between the at least part of the first data and the at least part of the second data and/or by using at least a part of the first augmentation data and at least a part of the second augmentation data.

The method may further comprise rendering in the GUI one of either the first data or the second data, wherein the user input comprises clicking or hovering on the desired inspection site in the rendering of one of either the first data or the second data. Therefore, the user, e.g. the dental practitioner, may dynamically select the area of the dental object they want to inspect based on the rendering of the first data and/or on the rendering of the second data.

The method may further comprise determining a spatial relationship between at least a part of the first data and at least a part of the second data. Thus, the part of the first data and the part of the second data describing a same portion of the dental object, e.g. the same tooth, or the same group of teeth, the same jaw and so forth, are accurately determined. In other words, determining said spatial relationship enables to determine spatially corresponding parts of the first data and of the second data, such as in a registration of the first data to the second data. This ensures that the first view and the second view are synchronized based on the determined spatial relationship, i.e. that they always show the same parts of the dental object corresponding to the desired inspection site.

Determining the spatial relationship may comprise identifying a position and an orientation of the at least a part of the second data with respect to the at least a part of the first data. The first data and the second data may have been obtained by acquiring information about the dental object from different angles. Therefore, determining the relative position and orientation ensures that the at least a part of the second data and the at least a part of the first data are aligned in the same reference system, such that parts of the first data and parts of the second data describing the same portion of the dental object may be identified.

The first data and the second data are generally obtained using different imaging devices, such as an intraoral scanner and X-ray/CBCT machine, respectively, and consequently one or more parts of the first data corresponding to one or more parts of the second data are generally not determined in an automated manner. Therefore, determining the spatial relationship between the at least a part of the first data and the at least a part of the second data is particularly advantageous to ensure that every time a new inspection site is selected by the user, the spatially corresponding parts of the first data and of the second data describing said new inspection site are determined to generate and update the first view and the second view. In this sense, according to the present disclosure, a live bidirectional synchronization is established between the first view and the second view. Said bidirectional synchronization may be achieved through the determined spatial relationship between the at least a part of the first data and the at least a part of the second data. Accordingly, the first view and the second view may be bidirectionally synchronized based on the determined spatial relationship between the at least a part of the first data and the at least a part of the second data.

Determining the spatial relationship may further comprise using at least part of the first augmentation data and using at least part of the second augmentation data to determine that the at least a part of the first data and the at least a part of the second data represent a same part of the dental object. The first augmentation data may comprise segmented tooth surface data and segmented gingiva data, and the second augmentation data may comprise segmented tooth volume data and segmented periodontal volume data. Furthermore, the segmented data may comprise a tooth number or teeth numbers in the segmented first data and in the segmented second data according to the Universal Tooth Numbering System. Thus, the segmented surface data and the segmented volume data may be used to determine part(s) of the first data and of the second data representing the same portion of the dental object, i.e. describing a same tooth, a same group of teeth, a same quadrant and so forth.

The second data may comprise one or more 2D X-ray images, and determining the spatial relationship between the at least a part of the first data and the at least a part of the second data may further or alternatively comprise:

- generating a 2D projection of the first data;

- estimating a pose of the at least a part of the first data relative to at least a part of the one or more 2D X-ray images by optimizing an agreement between the 2D projection of the first data and the one or more 2D X-ray image; and

- determining a transform defining the spatial correspondence relationship based on the estimated pose.

Advantageously, this may provide a modality-bridging transform between at least part of the 3D surface data and at least part of the 2D X-ray images, enabling registration of data obtained using different imaging modalities and having different dimensions. Furthermore, the method is generalizable across different geometries described the X-ray images, improving the scalability of the workflow.

The 2D projection may comprise a rendered silhouette or occluding contour of the first data in a viewing direction of the one or more 2D X-ray images. The optimizing may comprise minimizing a contour distance between one or more geometric boundaries of the dental object extracted from the one or more 2D X-ray images and any of the rendered silhouette or occluding contour of the first data. The viewing direction may be understood as the direction along which the one or more 2D X-ray images were taken. Advantageously, said silhouette/contour-based optimization approach only relies on the stable geometric boundaries, i.e. the silhouette or occluding contour and the geometric boundaries of the dental object extracted from the 2D X-ray images.

The method may further comprise determining one or more dental landmarks in the at least a part of the first data and determining the one or more landmarks in the at least a part of the one or more 2D X-ray images, and initializing the estimated pose using the one or more dental landmarks. The dental landmarks may for example comprise anatomical points such as cusp tips, incisal edges, occlusal planes and the like. Advantageously, this may improve the convergence speed of the method of the present disclosure and reduce the risk of local minima by starting from anatomically plausible poses.

In another aspect, there is disclosed herein a program product comprising instructions which, when executed by a computer, cause the computer to perform the method steps described herein. Thus, in practice the method disclosed herein can be executed by any computer system configured to read the computer program product disclosed herein. This is an advantage, as the instructions comprised in said computer program ensure that the execution of one or more steps of the method disclosed herein is automated.

In yet another aspect, there is disclosed herein a non-volatile computer-readable medium comprising instructions which, when executed by a computer, cause the computer to perform the method according to any of the disclosed embodiments. Thus, in practice the instructions to perform the method disclosed herein can be performed on any computer system configured to read the non-volatile computer-readable medium disclosed herein. This is an advantage, as said instructions can be retained also when the computer system is turned off, enabling the user to access the instructions and/or the data stored on the non-volatile computer-readable medium at any time and from any computer system configured to read the non-volatile computer-readable medium disclosed herein.

In yet another aspect, there is disclosed herein a system comprising one or more memories; a communication interface configured to exchange data with one or more external systems; a graphical user interface (GUI); a processing device coupled to the memory, the processing device configured to: obtain first data representing a surface of a dental object, wherein the first data is three-dimensional (3D) surface data; obtaining first augmentation data indicating an estimated presence of a first set of dental conditions in the first data; obtain second data representing an internal volume of the dental object; obtaining second augmentation data indicating an estimated presence of a second set of dental conditions in the second data; obtain a user input indicative of a desired inspection site of the dental object; determine a part of the first data corresponding to the desired inspection site; determine a part of the second data corresponding to the desired inspection site; render, in the GUI, a first view comprising the part of the first data corresponding to the desired inspection site with a visual representation of at least a part of the first augmentation data corresponding to the desired inspection site; and render, in the GUI, a second view comprising the part of the second data corresponding to the desired inspection site with a visual representation of at least a part of the second augmentation data corresponding to the desired inspection site.

For example, the first data and the second data may be both stored in the memory of the computer system. Alternatively, the first data may be stored in the memory of the computer system, and the second data may be stored in an external database, e.g. a database on a cloud, or an online database, and so forth. The communication interface may be configured to receive the first data and/or to receive the second data from one or more external systems. The desired inspection site may be any part or region of the dental object which the dental practitioner may want and/or need to inspect closely. By providing the GUI wherein both the information on the surface of the desired inspection site of the dental object and the information on the internal volume of the desired inspection site of the dental object is displayed, the dentist is given improved tools for simultaneously inspecting and comparing surface and sub-surface data, whereby they may more effectively identify possible dental conditions. Furthermore, by correlating the views of the surface and the internal volume at the desired inspection site, the system disclosed herein assists the dentist simultaneously viewing and comparing surface and sub-surface information of the health status of the desired inspection site to provide a more well-informed assessment of the condition of the dental object.

In yet another aspect, there is disclosed herein a computer-implemented method comprising the steps of:

- obtaining first data representing a surface of a patient's dental object, wherein the first data is three-dimensional (3D) surface data;
- obtaining first augmentation data indicating an estimated presence of a first set of dental conditions in the first data;
- obtaining second data representing an internal volume of the patient's dental object;
- obtaining second augmentation data indicating an estimated presence of a second set of dental conditions in the second data;
- obtaining one or more audio files comprising one or more of a recording of a discussion about a health status of the patient's dental object and/or a recording about a set of desired aesthetic features of the patient's dental object;
- automatically filling-in a dental chart of the patient, the dental chart comprising information about the dental object based on the first data, the first augmentation data, the second data, the second augmentation data and/or the one or more audio files.

The first data, first augmentation data, second data and second augmentation data may be intended as discussed above, and the considerations about the first data, first augmentation data, second data and second augmentation data and about the way(s) said data may be obtained still hold. Therefore, the dental chart provides a comprehensive overview of the health status of the patient's dental object, and it further provides information about the patient's preferences about the aesthetics of their own teeth. The discussion about the health status of the patient's dental object may be recorded during a clinical examination of the patient, which may be carried out by a dental practitioner in a dental clinic. For example, the dental practitioner may perform an in-mouth examination of the patient and comment on their findings while performing the examination, and said conversation may be recorded and stored as an audio file. Therefore, the one or more audio files may provide complementary information to the first data, first augmentation data, second data and second augmentation data, and the one or more audio files enhance the accuracy of the information about the patient's oral health. Advantageously, the dental chart provides the dental practitioner and the patient with a comprehensive overview of the patient's dental object. This overview may enable the dental practitioner to access all the information about the patient's dental object at once, and it may also enable the dental practitioner to communicate to the patient information about their oral health in an intuitive manner. Furthermore, the dental chart may be accessed at any time by the dental practitioner and/or by the patient, for example in a subsequent clinical examination of the patient. Advantageously, this ensures that historical information about the patient's oral health is not dispersed, but it is accessible through the same dental chart at any time.

Automatically filling-in the dental chart of the dental object may further comprise processing, by using one or more trained machine learning models, the first data, the first augmentation data, the second data, the second augmentation data, and the one or more audio files.

For example, each of the one or more trained machine learning models may be configured to process any of either the first data, the first augmentation data, the second data, the second augmentation data, or the one or more audio files. In another example, each of the one or more trained machine learning models may be configured to process two or more of the first data, the first augmentation data, the second data, the second augmentation data and/or the one or more audio files. In yet another example, a single trained machine learning model may be configured to process all of the first data, the first augmentation data, the second data, the second augmentation data and the one or more audio files. Advantageously, the one or more trained machine learning model may provide further insights into the health of the patient's dental site in an automated and efficient way.

Each of the one or more trained machine learning models may be configured to generate an output comprising one or more treatment recommendations and/one or more treatment plans for the dental object.

The one or more treatment recommendations/plans are automatically generated by the one or more trained machine learning models by simultaneously considering a plurality of different data and information about the patient, e.g. intraoral scan data, x-ray/CBCT data, indications relative to the presence of one or more dental conditions affecting the surface of the patient's dental object and/or affecting the internal volume of the patient's dental object, and/or the patient's personal preferences about the aesthetic of their teeth. It may be challenging for the dental practitioner to define a treatment plan for the patient by accounting for all this information in a unified and consistent manner. It is therefore advantageous that the output of the one or more trained machine learning models assists the dental practitioner in the decision-making process, enhancing the accuracy of the outcome of the clinical examination of the patient.

The dental chart may further comprise information about the dental object based on the output of each of the one or more trained machine learning models. Advantageously, this ensures that the dental chart also comprises the one or more treatment recommendations/plans which have been generated based on the patient's data obtained in a specific clinical examination. Besides offering a comprehensive overview of the patient's oral health and corresponding treatment recommendations/plans, this may assist the dental practitioner in tracking the progress or regression of one or more dental conditions of the patient's dental object. For example, the patient may visit the dental clinic a plurality of times during a year, and each time the dental practitioner may access the patient's dental chart and check whether one or more treatment opportunities have been missed over the past visits, e.g. because the patient declined those treatment opportunities. This may be further advantageous if the patient visits a different dental clinic, e.g. because they moved and changed city or even country. The new dental practitioner may access historical information about the patient through the dental chart, and have a comprehensive overview of the treatment recommendations/plans performed, initiated, and/or rejected at a previous time.

## Brief description of the drawings

The above and other features and advantages of the present invention will become readily apparent to those skilled in the art by the following detailed description of exemplary embodiments thereof with reference to the attached drawings, in which:

Figure 1a and 1b illustrate a flowchart of an example of the computer-implemented method according to the present disclosure;

Figure 2 illustrates a schematic representation of a system according to the present disclosure;

Figure 3 illustrates an example reference diagram of an embodiment of a trained model to estimate a presence of one or more dental conditions according to the present disclosure;

Figure 4 illustrates an example reference diagram of an embodiment of a trained model for estimating a presence of a dental condition according to the present disclosure;

Figure 5a, 5b, and 5c illustrate examples of a visualization on a graphical-user interface (GUI) of the computer-implemented method disclosed herein;

Figures 6a and 6b illustrate examples of a workflow according to the present disclosure;

Figure 7 illustrates a schematic representation of a system according to the present disclosure.

**<u>Detailed description</u>**

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the devices, systems, mediums, programs and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

While the dental object is referred to in singular, the dental object may be a group of dental features of a subject's, i.e. patient's, mouth, such as a group of teeth and their encircling gingiva. Examples of dental objects include any one or more of: tooth/teeth, gingiva, implant(s), dental restoration(s), dental prostheses, edentulous ridge(s), and/or combinations thereof. Alternatively, the dental object may be a gypsum model or a plastic model representing a subject's teeth. As an example, the dental object may comprise teeth and/or gingiva of a subject. The dental object may only be a part of the subject's teeth and/or oral cavity, since the entire set of teeth of the subject is not necessarily scanned during a scanning session. A scanning session may be understood herein as a period of time during which data (such as 2D images) of the dental object is acquired/obtained.

To obtain the first data, an intraoral scanner for acquiring images within an intraoral cavity of a patient is used. The intraoral scanner is a handheld intraoral scanner, i.e. a device configured to be held with a human hand. The intraoral scanner comprises one or more projector unit(s) configured for illuminating the dental object with probe light. The intraoral scanner comprises one or more camera unit(s) configured for acquiring 2D images of the dental object. The intraoral scanner may employ any suitable scanning principle such as triangulation-based scanning, stereo vision, structure from motion, confocal scanning, focus scanning, time-of-flight scanning, or other scanning principles. In some embodiments, the intraoral scanner employs a triangulation-based scanning principle. As an example, a projector unit and one or more camera units may be utilized to determine points in 3D space based on triangulation. In other embodiments, the intraoral scanner employs a focus-based scanning principle. A focus intraoral scanner is further described in EP 2 442 720 B1 by the same applicant.

A projector unit may be understood herein as a device configured for projecting light onto a surface, such as the surface of a dental object. In preferred embodiments, the projector unit is configured to project a pattern of light onto the surface of a dental object. The projector unit may be configured to project a pattern of light such that the pattern of light is in focus at a predefined focus distance measured along a projector optical axis. Features in the pattern of light may be used to extract information on the 3D geometry from the 2D images, e.g. by finding correspondence between a camera pixel in one camera unit observing a particular pattern feature and a projector pixel in the projector unit that generated that particular pattern feature unit or a camera pixel in another camera unit also observing that particular pattern feature, whereby triangulation may be performed.

Each projector unit may comprise one or more light sources. The light source(s) may be configured to generate light of a single wavelength (monochromatic), a distribution, e.g. a Poisson distribution, of wavelengths, or a combination of wavelengths (polychromatic). The combination of wavelengths may be produced by a light source configured to produce light comprising different wavelengths (such as white light). A light source of the one or more light sources may be configured to generate light at other wavelengths than at least some of the other light sources of the one or more light sources, e.g. the one or more light sources may comprise a light source generating red light, a light source generating blue light, and a light source generating green light. In some embodiments, each projector unit comprises a light source for generating white light. Alternatively, the projector unit may comprise multiple light sources such as LEDs individually producing light of different wavelengths (such as red, green, and blue) that may be combined to form light comprising different wavelengths. Thus, the light produced by the light source(s) may be defined by a wavelength defining a specific color, or a range of different wavelengths defining a combination of colors such as white light. In some embodiments, the light source is a diode, such as a white light diode, or a laser diode.

In some embodiments, the intraoral scanner comprises a light source configured for exciting fluorescent material to obtain fluorescence data from the dental object such as from teeth. Such a light source may be configured to produce a narrow range of wavelengths. In other embodiments, the intraoral scanner comprises an infrared light source, which is configured to generate wavelengths in the infrared range, such as between 700 nm and 1.5 $\mu$m. In some embodiments, the intraoral scanner comprises one or more light sources selected from the group of: Infrared (IR) light source, near-infrared (NIR) light source, blue light source, violet light source, ultraviolet (UV) light source, and/or combinations thereof. In some embodiments, the intraoral scanner comprises a first light source forming part of the projector unit, and one or more second light sources, e.g. IR-LED(s) and/or UV-LED(s), located in a distal part of the intraoral scanner, such as in the tip of the intraoral scanner.

A camera unit may be understood herein as a device for capturing a 2D image of the dental object. Each camera unit may comprise an image sensor for generating an image based on incoming light e.g. received from the illuminated dental object. The image sensor may comprise a 2 dimensional array of camera pixels. Each camera pixel may comprise one or more subpixels configured to capture light of a certain wavelength or wavelength interval, whereby a camera pixel may capture color data by adding the values of at least some of its associated subpixels. One or more of the subpixels may be configured for capturing light outside the visible spectrum, e.g. UV and/or IR wavelengths.

As an example, the image sensor may be an electronic image sensor such as a charge-coupled device (CCD) or an active-pixel sensor (CMOS sensor). Each image sensor may define an image plane, which may be understood as the plane that contains the object's projected image. Each image obtained by the image sensor(s) may comprise a plurality of image features, wherein each image feature originates from a pattern feature of the projected pattern. In some embodiments, one or more of the camera units comprise a light field camera. Preferably, each camera unit defines a camera optical axis. The camera units may further comprise one or more focus lenses for focusing light.

In some embodiments, the image sensor is a monochrome image sensor, wherein each pixel is associated with a single color channel, e.g. is a grayscale color channel, wherein the value of each pixel represents only an amount of light. In other embodiments, the image sensor is a color image sensor or an image sensor comprising a color filter array on the array of pixels. As an example, the color filter array may be a Bayer filter employing an arrangement of four color filters: Red (R), Green (G), Green (G), and Blue (B). The Bayer filter may also be referred to as an RGGB filter. When utilizing the image sensor data, color pixels may be combined to monochrome pixels of 2 x 2 color pixels for 3D depth reconstruction. In this case, the resolution of the 3D depth reconstruction is only half the resolution of the image sensor in each direction. When obtaining texture (color) images the full native resolution is preferably utilized (with color filtered pixels).

The image sensor may have an image frame rate of at least 30 frames per second, such as at least 60 frames per second, or even at least 90 frames per second. At least some of the frames may be dedicated to obtaining primary scan data. In frames dedicated to obtaining primary scan data, the one or more projector units may be configured for probe light comprising one or more discrete wavelengths of light, e.g. by light generated from one or more laser light sources. At least some of the frames may be dedicated to obtaining secondary scan data. At least some of the frames dedicated to obtaining secondary scan data may be dedicated to obtain fluorescence data. The one or more projector units may be configured for emitting UV light during frames dedicated to obtain fluorescence data. At least some of the frames dedicated to obtaining secondary scan data may be dedicated to obtain IR data. The one or more projector units may be configured for emitting IR light during frames dedicated to obtain fluorescence data. At least some of the frames dedicated to obtaining secondary scan data may be dedicated to obtain texture/color data. The one or more projector units may be configured for emitting white light during frames dedicated to obtain fluorescence data. Alternatively, the one or more projector units may be configured for emitting monochromatic light of a first wavelength, e.g. green, during some of the frames dedicated to obtain fluorescence data, and for emitting monochromatic light of a second wavelength, e.g. blue, during some of the frames dedicated to obtain fluorescence data, and for emitting monochromatic light of a third wavelength, e.g. red, during some of the frames dedicated to obtain fluorescence data, whereby the color(s) of the dental object may be calculated by adding the frames dedicated to obtain fluorescence data.

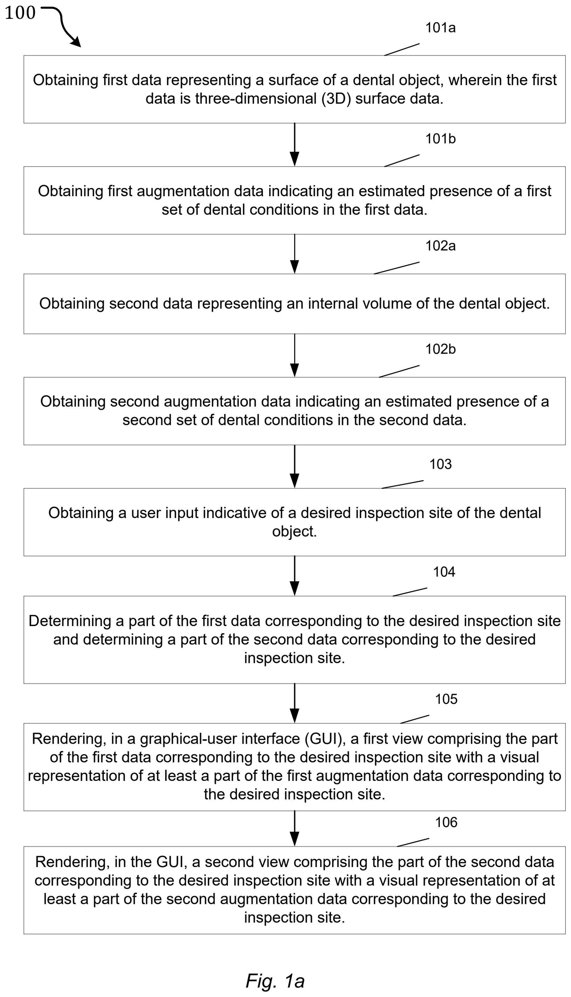

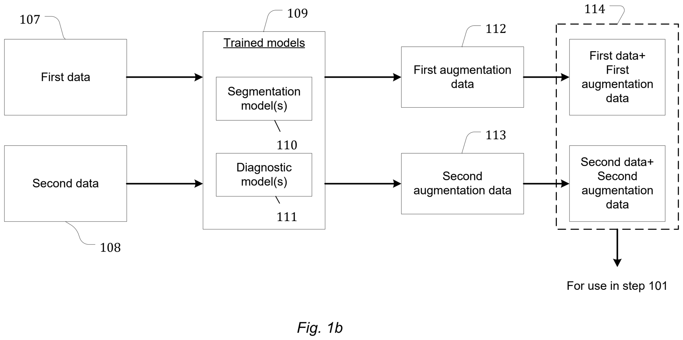

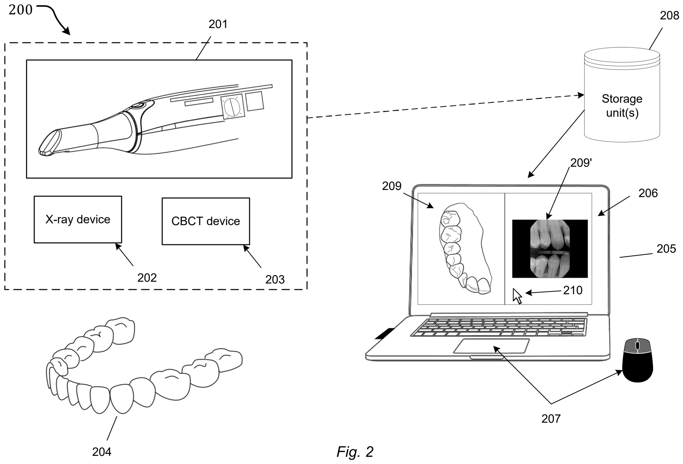

Figure 1 illustrates a flowchart of an example of the computer-implemented method according to the present disclosure. In step 101a, first data representing a surface of a dental object is obtained, wherein the first data is three-dimensional (3D) surface data. In step 101b, first augmentation data indicating at least an estimated presence of a first set of dental conditions in the first data. For example, the first data may be a digital 3D model of the dental object of the patient describing at least a 3D geometry of the surface of the dental object. The 3D model may be based on intraoral scan data of the dental object acquired upon scanning the dental object with an intraoral scanning device, such as the one indicated as reference number 201 in Figure 2, during a clinical visit of the patient. Alternatively, the 3D model may have been generated during a previous clinical visit of the patient, during which a dental practitioner performed an intraoral scanning of the dental object by means of the intraoral scanning device. The 3D model generated during the previous examination may have been stored on a storage unit, e.g. a local and/or remote memory unit of a computer system on which the computer-implemented method according to the present disclosure is performed. In this scenario, the first data may be obtained upon loading the 3D model from the memory unit.

The first data may comprise a plurality of data points collectively describing the surface of the dental object in 3D space. In one example, the plurality of data points may be a point cloud/a plurality of point clouds in 3D space, wherein each point cloud comprises a set of points in 3D space described by a set of Cartesian coordinates (x, y, z). In another example, the plurality of data points may comprise a plurality of facets comprised in a mesh describing the surface of the dental site in 3D space. Each facet may be a triangle in the case of a triangulated mesh, or any other polygon in the case of a polygonal mesh. In yet another example, the plurality of data points may comprise a plurality of vertices comprised in a mesh describing the surface of the dental site in 3D space. In general, the plurality of data points may comprise any other data which is suitable to describe at least the geometry of the surface of the dental object in 3D space.

At least a part of the first augmentation data may be obtained upon processing the first data using a trained model, e.g. a pre-trained machine learning model, for each dental condition in the first set of dental conditions. The trained machine learning model for each dental condition in the first set of dental conditions may be configured to receive as an input the first data and to output a probability that the corresponding dental condition is present in the first data. Further details about the trained machine learning model for each dental condition in the first set of dental conditions will be provided in the following paragraphs of the detailed description. The first set of dental conditions may comprise one or more of caries, gum recession, plaque, gum inflammation and/or tooth wear. In general, the first set of dental conditions may comprise any dental condition which affects the surface of the dental object, and/or any dental condition which affects the enamel of the dental object.

The first augmentation data may further comprise segmented tooth surface data and segmented gingiva surface data of the dental object described by the first data, which may be obtained upon processing the first data using a trained model, preferably a trained neural network, configured to segment the first data. For example, the first augmentation data may comprise, for each data point in the first data, an indication of whether that data point belongs to a tooth surface, to a gingiva surface, to a dental brace surface, and so forth. The first augmentation data may further comprise a tooth number or index according to the Universal Tooth Numbering system for each tooth described by the first data. Examples of segmentation algorithms and methods for the first data will be discussed later in the detailed description of the present patent application.

In step 102a, second data representing an internal volume of the dental object is obtained. In step 20b, second augmentation data indicating an estimated presence of a second set of dental conditions in the second data is obtained. In one example, the second data may be two-dimensional (2D) data. The 2D data may comprise one or more x-ray images obtained upon illuminating the dental object with light in the x-ray domain, e.g. by means of an x-ray medical device. The 2D data may further or alternatively comprise one or more infrared images obtained upon illuminating the dental object with light in the infrared domain, e.g. by means of an intraoral scanning device configured to shine infrared light on the dental object and to generate images of a region between the enamel and the dentin of the dental object.

In another example, the second data may be 3D internal volume data comprising one or more Cone Beam Computer Tomography (CBCT) images, obtained by using a cone-shaped X-ray beam. In general, the second data may comprise any other data comprising at least internal volume information of the dental object. The second data may be obtained during the same clinical visit of the patient as the first data, e.g. in a dental studio equipped with both an intraoral scanning device and an x-ray machine. Alternatively, the second data may have been obtained during another clinical visit of the patient, e.g. during a clinical visit of the patient to a clinic different than the dental studio and equipped with x-ray and/or CBCT devices. Thus, the second data may have been stored, during said previous visit, on a local or remote storage which can be accessed, either locally or remotely, by the dental practitioner during the present clinical visit of the patient.

Similarly to the first augmentation data, the second augmentation data may be obtained upon processing the second data using a trained model for each dental condition in the second set of dental conditions. The trained model may be for example a pre-trained machine learning model for each dental condition in the second set of dental condition. For example, the trained model for each dental condition in the second set of dental conditions may be configured to receive the second data as input and to output a probability that the corresponding dental condition is present in the second data. The second set of dental conditions may comprise one or more of proximal caries, calculus and/or periapical radiolucency. However, the second set of dental conditions may comprise any sub-surface dental condition affecting the internal volume health of the dental object which is of interest to infer the oral health status of the patient. The second augmentation data may further comprise segmented tooth volume data and segmented periodontal volume data of the dental object described by the second data, which may be obtained upon processing the second data using a trained model, preferably a trained neural network, configured to segment the second data. For example, the second augmentation data may comprise, for each data point in the second data, an indication of whether that data point belongs to a tooth volume, to a bone volume, to a periodontal volume, to a dental brace volume, and so forth. The second augmentation data may further comprise a tooth number or index according to the Universal Tooth Numbering system for each tooth described by the second data. Examples of segmentation algorithms and methods for the second data will be discussed later in the detailed description of the present patent application.

In step 103, a user input indicative of a desired inspection site of the dental object is obtained. In one example, a rendering of the first data and/or a rendering of the second data are displayed in a Graphical User Interface, e.g. a display of the computer system on which the computer-implemented method is performed. In this example, the user input may comprise hovering or clicking on the desired inspection site in the rendering of the first data and/or in the rendering of the second data. In another example, the user may select the desired inspection site by drawing a selection box encompassing the desired inspection site in the rendering of the first data and/or in the rendering of the second data. The selection box may have a predefined shape, and the user may control the size of the selection box to ensure that the desired inspection site is encompassed in the selection box. The selection box may further or alternatively be drawn by the user on the rendering of the first data or on the rendering of the second data, e.g. by means of a virtual pencil/pen or by means of a cursor in the display. In yet another example, the user may select the desired inspection site by typing in a command box displayed in the GUI, e.g. by means of a keyboard of the computer system on which the method is executed, and/or voicing the number(s) in the Universal Tooth Numbering System of the tooth/teeth which they want to inspect. The desired inspection site may comprise a tooth, a group of teeth, a quadrant, a jaw, or any other region of the dental object which the dental practitioner needs or wants to inspect closer.

In step 104, a part of the first data corresponding to the desired inspection site is determined, and a part of the second data corresponding to the desired inspection site is further determined. Determining the part of the first data corresponding to the desired inspection site may comprise determining a location of the desired inspection site selected by the user, and determining the part of the first data describing the 3D geometry of the surface of the dental object in the selected location and/or in the proximity of the selected location. Similarly, determining the part of the second data corresponding to the desired inspection site may comprise determining a location of the desired inspection site, and determining the part of the second data describing the internal volume of the dental object in the selected location and/or in the proximity of the location.

For example, the first augmentation data may be used to determine the part of the first data corresponding to the desired inspection site and the second augmentation data may be used to determine the part of the second data corresponding to the desired inspection site. For example, the dental practitioner may select the two incisors of the lower jaw. Accordingly, the first augmentation data may be retrieved and used to determine, based on the segmented tooth surface data comprised therein, the part of the first data corresponding to the two lower incisors, e.g. the teeth which are labelled with tooth number 25 and tooth number 24, respectively, according to the Universal Tooth Numbering System. Similarly, the second augmentation data may be retrieved and used to determine, based on the segmented tooth volume data comprised therein, the part of the second data corresponding to the lower incisors. In one example, the second data may comprise one or more 2D x-ray images, and the second augmentation data may comprise the tooth number for each tooth in each x-ray image. Based on the selected desired inspection site in the first data, the second augmentation data may be used to select the x-ray image with the largest overlap of teeth and/or regions of the dental object in the desired inspection site. In other words, the first augmentation data and second augmentation data may be used to determine corresponding and/or overlapping regions in the first data and in the second data, based on the received user input.

In another example, a bounding box of each tooth in the second data may be predicted. For example, a bounding box of each tooth in the x-ray image(s) may be predicted. Then, based on the selected desired inspection site on the first data, the teeth numbers of the teeth in the selected desired inspection site may be determined based on the first augmentation data. The corresponding teeth numbers in the second augmentation data may be identified, and they may be used as input to crop the x-ray image(s) to the desired inspection site. The selection process may as well work the other way around, i.e. the user may select the desired area on the second data, and accordingly the first augmentation data may be retrieved and used to determine the part of the first data corresponding to the desired inspection site based on the teeth numbers of the teeth comprised in the desired inspection site.

In step 105, a first view comprising the part of the first data corresponding to the desired inspection site is rendered in a GUI with a visual representation of at least a part of the first augmentation data. In step 106, a second view comprising the part of the second data corresponding to the desired inspection site is rendered in the GUI with a visual representation of at least a part of the second augmentation data. For example, the first view and the second view may be displayed side-by-side in the GUI. In another example, the first view may be overlayed/superimposed on the second view, such that the first view and the second view can be visualized in a common scene, e.g. a common 2D scene in the case where the second data comprises one or more 2D images or a common 3D scene in the case where the second data comprises CBCT images or a CBCT 3D model. For example, the rendering may comprise a panoramic view of the x-ray image(s) corresponding to the desired inspection site with overlayed thereon the 3D data corresponding to the surface of the desired inspection site in a common 2D scene.

In yet another example, the second view may be overlayed onto the first view, such that the second view and the first view may be visualized in a common 3D scene. For example, the 3D model of the surface of the desired inspection site may be displayed, with overlayed thereon the 2D x-ray image(s) of the desired inspection site in a common 3D scene with the first data. The at least a part of the first augmentation data may comprise the one or more dental conditions in the first set of dental conditions which are associated with the desired inspection site. Similarly, the at least a part of the second augmentation data may comprise the one or more dental conditions in the second set of dental conditions which are associated with the desired inspection site. Therefore, the first view may comprise a visual indication of the one or more dental conditions in the first set of dental conditions associated with the desired inspection site, and the second view may comprise a visual indication of the one or more dental conditions in the second set of dental conditions associated with the desired inspection site. The visual indication may comprise a different color for each dental condition, or it may comprise a different pattern for each dental condition. Alternatively, the visual indication may be deactivated and reactivated on the rendering of the first view and/or on the rendering of the second view, e.g. by means of a tool bar or command selection list displayed in the GUI. The visual indication may further comprise a window with a list of the one or more dental conditions in the first set of dental conditions (second set of dental conditions) which pops-up in the GUI upon clicking or hovering on the desired inspection site in the first view (second view).

It will be appreciated by those skilled in the art that the first view and the second view are synchronized, i.e. the first view and the second view are dynamically changed upon receiving an input indicative of a new desired inspection site. In other words, the first view and the second view always comprise corresponding and/or overlapping parts of the dental object, i.e. the part of the first data describing the surface of the desired inspection site and the corresponding part of the second data describing the internal volume of the desired inspection site. Accordingly, the first view and the second view may simultaneously change in the GUI each time the user selects a different inspection site.

Figure 1b illustrates an example of a workflow to obtain data for use in step 101 of the computer-implemented method of the present disclosure. First data 107 and second data 108 are obtained. The first data 107 may comprise 3D surface data representing at least a 3D geometry of a surface of a dental object of a patient. For example, the first data 107 may be acquired by scanning the dental object by means of an intraoral scanning device in a clinical visit of the patient to the dental clinic. In another example, the first data 107 has been obtained by scanning the dental object with an intraoral scanning device during a previous clinical visit of the patient to the dental clinic, and the first data 107 was stored in a memory unit during this previous clinical visit. The second data 108 may comprise 2D x-ray images, 2D infrared images, and/or CBCT scan images, and/or any other data suitable to describe the internal volume of the dental object. For example, 2D x-ray images of the dental object may be acquired by means of an x-ray device during a clinical visit of the patient to the dental clinic. Alternatively said images may have been obtained in a previous clinical visit of the patient, or said images may have been taken in a different clinic than the dental studio, e.g. in a clinic equipped with x-ray and/or CBCT scanning devices, and therefore stored in a memory unit.

The first data 107 and the second data 108 may be input in one or more trained models 109. The one or more trained models 109 may comprise a segmentation model 110 and a diagnostic model 111, wherein the segmentation model 110 may be configured to segment the data input in the model and the diagnostic model 111 may be configured to generate one or more diagnostic predictions describing the dental health of the input data.

In one example, the segmentation model 110 comprises a first segmentation model configured to segment the first data 107 and a second segmentation model configured to segment the second data 108. The first segmentation model may comprise a first neural network which is trained to segment any dental objects in a digital 3D model. The first neural network may be trained by feeding its algorithm with a large number of virtual 3D models of dental objects such as teeth, parts of teeth, gingiva, parts of gingiva, an upper jaw, a lower jaw, a whole dentition, dental appliances such as aligners or braces, etc., and feeding its algorithm with values or information for each virtual 3D model and/or dental object in a virtual 3D model, such as whether what is in the virtual 3D model is a tooth, teeth, part of a tooth, part of dentition, dentition, dental appliances such as aligner or dental braces, or part of a gingiva. Such a training may allow the first neural network to recognize the dental object that is represented in the first data 107, and may allow the first neural network to identify any dental objects in a digital 3D model, and segmenting that virtual 3D model. The first neural network may further be configured to identify the dental object by determining a tooth number or teeth numbers in the first data 107 according to the Universal Tooth Numbering System. The first neural network may segment the first data 107 by using any of known 3D segmenting methods, such as polygon triangulation, space sweep, surface decomposition, and so forth.

The second neural network may further be configured to segment 2D and/or 3D images of dental objects. The second neural network may be trained to segment any dental objects in the 2D/3D images. For example, the second neural network may be trained by feeding its algorithm with a large number of 2D/3D images of dental objects such as teeth, parts of teeth, periodontal structures and parts of periodontal structures, and feeding its algorithm with values or information for each image and/or dental object in an image, such as, whether what is in the image is a tooth, teeth, part of a tooth, part of dentition, dentition, dental appliances such as aligners or braces, or part of a gingiva and so forth. Furthermore, the second neural network may be trained by feeding its algorithm with a large number of images of dental objects such as teeth, parts of teeth, periodontal structures and parts of periodontal structures, and feeding its algorithm with values or information for each image and/or dental object in an image, such as, whether what is in the image is a bone structure, a cavity, a crown, a dental implant, dentin, enamel, filling-metal, pulp, and so forth. The images used to train the second neural network may be one or more of 2D x-ray bitewing images, 2D x-ray preapical images, 2D x-ray panoramic images, 3D CBCT scan images, and/or a combination of all of them. The second neural network may further be configured to identify the dental object by determining a tooth number or teeth numbers in the segmented 2D/3D image according to the Universal Tooth Numbering System. The second neural network may therefore segment the second data 108 by any method of image segmentation known in the art, such as thresholding, clustering, edge detection, or image segmentation neural networks, such as pulse-coupled neural networks or convolutional neural networks, such as U-net.

In yet another example, the segmentation model 110 may be a third neural network configured to segment both the first data 107 and the second data 108. The third neural network may be trained in a similar way as described above, using a bimodal training data set comprising both data similar to the first data 107 and data similar to the second data 108, with relevant annotations representing the dental objects described by each data in the training data set.

In one example, the diagnostic model 111 comprises a fourth neural network configured to make diagnostic predictions relative to a presence of at least one dental condition in a first set of dental conditions in the first data 107 and a fifth neural network configured to make diagnostic predictions relative to a presence of at least one dental condition in a second set of dental conditions in the second data 108.

For example, the fourth neural network may be configured to detect a presence of a dental condition in a digital 3D model of a dental object. The fourth neural network may be trained based on training data comprising a plurality of digital 3D models which are acquired, for example, from a cloud repository. To ensure gender and ethnicity variation in the dataset, the training data may have been created with 3D models acquired for patients from different countries, genders, and nationalities. Each of the 3D models forming part of the training dataset comprises data associated with tooth color, fluorescence (red and green) and geometry information, such as depth values etc. Each 3D model of the training data may be a discretized 3D model, i.e. each 3D model in the training data may comprise a plurality of granularity elements/data points, such as facets, vertices, points in 3D space, and so forth. Therefore, the fourth neural network may be trained by feeding its algorithm with 3D models comprising a plurality of granularity elements, wherein the granularity elements are similar to the plurality of data points comprised in the first data 107. Furthermore, the plurality of data points in the training data of the fourth neural network may comprise a plurality of annotations comprising quantified local information about features of each data point in the training data set. For example, the features may comprise a presence or absence of the specific dental condition in each data point, and the features may further comprise a severity level of the dental condition. Therefore, the fourth neural network may be configured to receive as an input the first data 107, to process each of the plurality of data points in the first data 107 and to output, for each of the plurality of data points, a probability that the dental condition is present in the data points.

The fourth neural network may further output for each of the plurality of data points a severity level of the dental condition detected in the data point. A plurality of different neural networks similar to the fourth neural network described above may be trained to make predictions about the presence of each dental condition in the first set of dental conditions in the first data 107. Alternatively, a same neural network similar to the fourth neural network described above may be used to make predictions about the presence of the first set of dental conditions in the first data 107, in which case the neural network may be trained in a way similar to the one discussed for the fourth neural network and using annotations comprising the presence or absence of each dental condition in the first set of dental conditions.

In one example, the fifth neural network may be trained based on training data comprising a plurality of 2D and/or 3D images of dental objects, such as 2D x-ray images and/or 3D CBCT scan images, which are acquired for example from a cloud repository. Each image of the training data may have been pre-processed to generate a discretized image, i.e. each image in the training data may comprise a plurality of granularity elements/data points, such as pixels in the case of 2D x-ray images or voxels in the case of 3D CBCT scan images. Therefore, the fifth neural network may be trained by feeding its algorithm with 2D and/or 3D images comprising a plurality of granularity elements, wherein the granularity elements are similar to the plurality of data points comprised in the second data 108. Furthermore, the plurality of data points in the training data of the fifth neural network may comprise a plurality of annotations comprising quantified local information about features of each data point in the training data. For example, the features may comprise a presence or absence of the specific dental condition in each data point, and the features may further comprise a severity level of the dental condition. Therefore, the fifth neural network may be configured to receive as an input the second data 108, to process each of the plurality of data points in the second data 108 and to output, for each of the plurality of data points, a probability that the dental condition is present in the data points. The fourth neural network may further output for each of the plurality of data points a severity level of the dental condition detected in the data point. A plurality of different neural networks similar to the fifth neural network described above may be trained to make predictions about the presence of each dental condition in a second set of dental conditions in the second data 108. Alternatively, a single network similar to the fifth neural network may be used to make predictions about the presence of the second set of dental conditions in the second data 108, in which case the neural network may be trained in a way similar to the one discussed for the fifth neural network and using annotations comprising the presence or absence of the second set of dental conditions.

In yet another example, the diagnostic model 111 may be a sixth neural network configured to process both the first data 107 and the second data 108 to generate diagnostic predictions circa the presence of a first set of dental conditions in the first data 107 and a second set of dental conditions in the second data 108.

In yet another example, the segmentation model 110 and the diagnostic models 111 may coincide, i.e. they may be a single trained neural network configured both to segment the first 107 and second data 108, and to make diagnostic predictions relative to the first 107 and second data 108. In this example, the training method may be similar to the methods discussed above, and it may be based on using a training data set comprising data similar to the first data 107 and second data 108. The training data may further comprise annotations related to segmented tooth surface data, segmented gingiva data, segmented enamel data, segmented pulp data, segmented dentin data, segmented tooth volume data, segmented periodontal volume data, presence or absence of one or more dental conditions, severity level(s) of one or more dental conditions and so forth.

The output(s) of the trained model(s) 109 may be first augmentation data 112 and second augmentation data 113. The first augmentation data 112 may comprise segmented tooth surface data and segmented gingiva data based on the first data 107. The first augmentation data may further comprise a tooth number according to the Universal Tooth Numbering System for each tooth described by the first data 107. The first augmentation data 112 may further or alternatively comprise indication of a presence of a first set of dental conditions in the first data 107, with or without a corresponding severity level for each dental condition in the first set of dental conditions. The second augmentation data 113 may further comprise segmented tooth volume data, segmented periodontal volume data, segmented enamel data, segmented dentin data, segmented pulp data, and so forth. The second augmentation data 113 may further comprise a tooth number according to the Universal Tooth Numbering System for each tooth in the second data 108. The second augmentation data 113 may further comprise indication of a presence of a second set of dental conditions in the second data 108, with or without a corresponding severity level for each dental condition in the second set of dental conditions. Thus, input data 114 for use in step 101 of the computer-implemented method according to the present disclosure, as the one illustrated as reference number 100 in Figure 1, is obtained. The input data 114 comprises the first data 107 augmented with the first augmentation data 112 and the second data 108 augmented with the second augmentation data 113.

The trained model(s) 109 may be executed on the same computer system during a clinical visit of the patient, or they may have been executed on different computer systems prior to the clinical visit of the patient, or a combination of both situations may be possible. For example, the first data 107 may be processed on a first computer system of the dental studio where the clinical visit is carried out and the second data may have been processed, at a previous time, on a second computer system of a clinic, e.g. a clinic equipped with x-ray/CBCT devices. In another example, the first data 107 may have been processed on a third computer system in a previous clinical visit of the patient, wherein the third computer system may be the same as the first computer system, or it may be different from the first computer system.

In all the above-mentioned examples, the computer system on which the computer-implemented method of the present disclosure is performed may be configured to retrieve, either from one or more local storage units, or from one or more remote storage units, or from a combination of local and remote storage units, the first data comprising the first augmentation data and the second data comprising the second augmentation data.

Figure 2 is a schematic representation of a system 200 according to the present disclosure. The system comprises a computer system 205. The computer system 205 comprises a display device 206, a keyboard, touchpad and/or a mouse 207 or touchscreen for entering data and activating virtual buttons (user interaction elements) visualized on the display 206 device. The display device 206 may be a computer screen, a touchpad screen or e.g. a smart phone screen comprising a graphical user interface and having a visual display, wherein information about the dental object 204 may be displayed.

The computer system 205 further comprises one or more processors configured to execute one or more steps of the computer-implemented method of the present disclosure. The computer system 205 further comprises a memory unit having stored thereon a program content executable by the processor(s), the program content comprising executable instructions to perform the computer-implemented method according to the present disclosure. Further, the computer system 205 may comprise one or more storage units 208 configured to store data, such as 3D data relative to a surface of the dental object 204 acquired from an intraoral scanning device 201, and/or one or more 2D images of the dental object 204 acquired upon illuminating the dental object with light in the x-ray domain using an x-ray device 202, and/or 2D images of the dental object 204 acquired upon illuminating the dental object with light in the infrared domain using the intraoral scanning device 201, and/or 3D data describing the internal volume of the dental object 204 acquired by using a CBCT device 203.

In general, image data relative to the dental object 204 acquired from a plurality of different intraoral scanners and/or different dental devices may be stored in the storage unit(s) 208. Furthermore, data that has been processed for using e.g. the method disclosed herein may be stored in the storage unit(s) 208. Patient specific identification data, diagnostic data acquired from other scanning modalities that an intraoral scanner, and other patient relevant information may be stored in the storage unit(s) 208. The storage unit(s) may be configured as cloud storage, online databases, or for example storage on multiple computer services which are configured to communicate with each other over a network.

Processing and storage of data relevant for analysis by e.g. a diagnostic module may be performed in a cloud setup and loaded into a computer therefrom and/or performed locally. The storage unit(s) 208 may also store 3D surface data generated historically for a patient, as well as 3D surface data generated during a clinical visit, as well as any other data generated historically for a patient using any other scanning modalities than an intraoral scanner, e.g. historical x-ray and/or CBCT images. For example, the storage unit 208 may have first data describing the 3D surface of the dental object 204 and second data describing an internal volume of the dental object 204 stored thereon.

The computer system 205 may comprise a communication interface. The communication interface may be configured to support a number of communication protocols, such as Ethernet, Wi-fi, Bluetooth etc., for enabling the computer system 205 to access a number of communication paths. For example, the communication interface may be configured to enable the computer system 205 to receive and/or exchange data and to communicate with external devices and networks. For example, the communication interface may enable the computer system 205 to receive, either wirelessly or through a wired connection, intraoral scan data relative to the surface of the dental object 204 by the intraoral scanning device 201. Furthermore, the communication interface may enable the computer system 205 to access the data stored on the storage unit 208 when said storage unit is a remote storage unit, e.g. a cloud storage, or an online database.

The display device 206 may be configured to display a rendering of first data 209 describing the surface of the dental object 204 in 3D space and/or a rendering of second data 209' describing the internal volume of the dental object 204. The display device 206 may be further configured to display any other relevant data relative to the dental object 204, e.g. the display device 204 may be configured to display a rendering of three different set of data, or four different set of data, and so forth. For example, the rendering 209 may comprise 3D surface data of the dental object 204, and the rendering 209' may comprise one or more bitewing x-ray images, or one or more periapical x-ray images, or one or more occlusal x-ray images, or one or more panoramic x-ray images, or one or more cephalometric x-ray images or one or more CBCT scans. The rendering 209' may comprise one or more different set of data among the above mentioned data, e.g. it may comprise a rendering of bitewing x-ray images and of panoramic x-ray images. In some examples, the rendering 209 may further or alternatively comprise a 3D height map obtained upon comparing two or more digital 3D models of the dental object 204, wherein each of the two or more digital 3D models has been obtained at a different time. The height map may highlight one or more differences between the two or more digital 3D models, e.g. differences in a position of one or more teeth, or differences in the size of one or more teeth which may be indicative of tooth wear, or any other difference between the two or more 3D models which may be of clinical interest. In yet another example, the rendering 209 may further or alternatively comprise a cross-sectional comparison between two or more digital 3D models, wherein each of the two or more digital 3D models has been obtained at a different time. The rendering 209 and the rendering 209' may further comprise a visual indication of diagnostic predictions relative to the dental object 204, e.g. the rendering 209.

The computer system 205 may be further configured to receive one or more input signals from the user, e.g. through the touchpad and/or a mouse 207, indicative of a desired inspection site of the dental object. The user may for example select the desired inspection site by clicking or hovering a digital cursor 210 on the rendering 209 or on the rendering 209'. Alternatively, the user may use the digital cursor 210 or a digital pencil (not shown here) to draw a selection box on the rendering 209 or on the rendering 209'. Accordingly, the display unit 206 may be configured to display a rendering of the part of the first data corresponding to the desired inspection site and a rendering of the part of the second data corresponding to the desired inspection site. In other words, the rendering 209 may comprise the part of the first data corresponding to the desired inspection site and the rendering 209' may comprise the part of the second data corresponding to the desired inspection site.

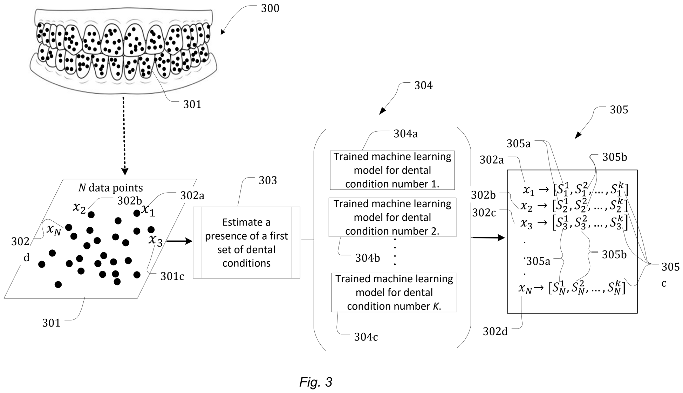

Figure 3 illustrates an example reference diagram of an embodiment of a trained model to estimate a presence of one or more dental conditions according to the present disclosure. First data 300 describing a dental object is obtained. The first data 300 may be 3D data generated during a scanning session of the dental site of a patient performed during a clinical visit of the patient, or it may have been generated in a scanning session performed at a previous time and stored, e.g. in a storage unit of a computer system on which the method disclosed herein is performed, such as the computer system indicated as reference number 205 in Figure 2.

The obtained first data 300 comprises a plurality of data points 301 collectively describing a surface of the dental object in 3D space. The plurality of data points 301 may comprise $N$ data points $x_1(302a), x_2(302b), x_3(302c), ..., x_N(302d)$. In one example, the plurality of data points 302 may be a point cloud/ a plurality of point clouds in 3D space, wherein each point cloud comprises a set of points in 3D space described by a set of Cartesian coordinates (x,y,z). In another example, the plurality of data points 301 may comprise a plurality of facets comprised in a mesh describing the surface of the dental site in 3D space. Each facet may be a triangle in the case of a triangulated mesh, or any other polygon in the case of a polygonal mesh. In yet another example, the plurality of data points 301 may comprise a plurality of vertices comprised in a mesh describing the surface of the dental site in 3D space. In general, the plurality of data points may comprise any data which is suitable to describe the surface of the dental object in 3D space.

In step 303, the plurality of data points 301 is processed to estimate a presence of a first set of dental conditions. The first set of dental conditions may comprise one or more of caries, tooth cracks, recession, wear, plaque, and any other dental condition which may be of interest to the dental practitioner to assess the health status of the dental site. The processing 303 comprises processing each of the plurality of data points 301 using a trained model for each dental condition in the first set of dental conditions 304. Accordingly, if the 3D model 201 comprises N data points $x_1$(302$a$),$x_2$ (302b),$x_3$(302$c$), ..., $x_N$(302$d$), each of these data points is input in a trained machine learning model for each dental condition in the first set of dental conditions.

Referring to Figure 3, the first set of dental conditions comprises a number of K dental conditions. Accordingly, each of the $N$ data points 301 are inputted in a trained machine learning model 304a for the dental condition number 1, in a trained machine learning model for dental condition number 2, and so forth, up to the trained machine learning model 304c for dental condition number K. For each data point, each of the trained machine learning models for a specific dental condition in the first set of dental conditions outputs a probability that the dental condition is present in the corresponding data point. The output probability may be intended as the probability that the dental condition is present in the data point with a severity level S. Therefore, according to the example illustrated in Fig. 3 the trained machine learning model 304a outputs for each data point in 301 a severity level 305a for the dental condition number 1, the trained machine learning model 304b outputs for each data point in 301 a severity level 305b for dental condition number 2, and so forth, up to the trained machine learning model 304c which outputs for each data point in 301 a severity level 305c for dental condition number K. Therefore, referring to Figure 3 the output of the trained machine learning models 304, i.e. the output of the processing 303, is:

$$x_1 \rightarrow [S_1^1, S_1^2, ..., S_1^k]$$

$$x_2 \rightarrow [S_2^1, S_2^2, ..., S_2^k]$$

$$x_3 \rightarrow [S_3^1, S_3^2, ..., S_3^k]$$

$$.$$

$$.$$

$$.$$

$$x_N \rightarrow [S_N^1, S_N^2, ..., S_N^k]$$

wherein $S_1^1, S_2^1, ..., S_N^1$ are the severity levels 305a of dental condition 1 determined by model 304a for the data point $x_1$ (302$a$),$x_2$ (302$b$),$x_3$(302$c$), ..., $x_N$ (302d), respectively, $S_1^2, S_2^2, ..., S_N^2$ are the severity levels 305b of dental condition 2 determined by the model 304b for the data points $x_1$ (302$a$),$x_2$ (302$b$),$x_3$(302$c$), ..., $x_N$ (302d), respectively, and so forth, up to $S_1^k, S_2^k, ..., S_N^k$ which are the severity levels 305c determined by the model 304c of dental condition K for $x_1$ (302$a$), $x_2$ (302$b$),$x_3$(302$c$), ..., $x_N$ (302d), respectively. The output 305 may be stored as augmentation data of the first data.

The example illustrated in Figure 3 refers to a trained machine learning model to detect the presence of the first set of dental condition in the first data 300, however the presence of each dental condition in the dental object may be estimated using other methods, e.g. mathematical and/or statistical methods using color information comprised in the first data. Furthermore, the example illustrated in Figure 3 refers to first data comprising 3D surface information of the dental object. However, a similar workflow to the one illustrated in Figure 3 may be used to estimate a presence of a second set of dental conditions in second data describing an internal volume of the dental object. For example, the second data may comprise a plurality of pixels in the case where the second data is 2D x-ray and/or 2D infrared data, or the second data may comprise a plurality of voxels in the case where the second data is 3D CBCT data. In this case, the trained models 304 may be configured to process each of the plurality of pixels and/or each of the plurality of voxels to generate a severity level of each dental condition in the second set of dental conditions for each pixel and/or for each voxels in the second data. The second set of dental conditions may comprise proximal caries, plaques, and/or periapical radiolucency. In another example, the trained models 304 may be a single trained model configured to process both the plurality of data points of the first data and the plurality of pixels and/or voxels of the second data to estimate a presence of the first set of dental conditions and a presence of the second set of dental conditions. In this case, an output similar to the output 305 would be generated both for the first data and second data using a single trained model.

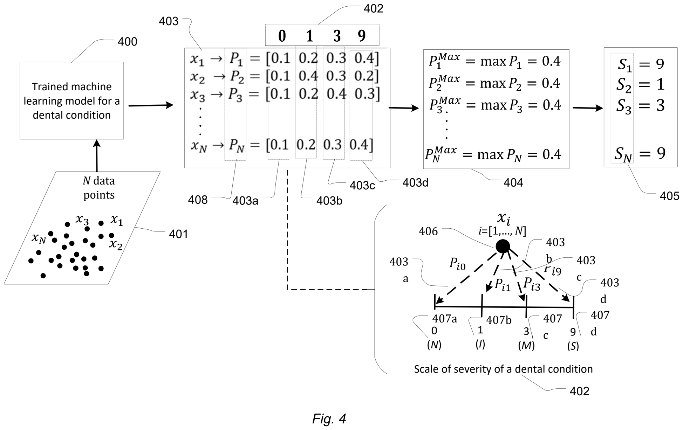

Figure 4 illustrates an example reference diagram of an embodiment of a trained model 400 for estimating a presence of a dental condition according to the present disclosure. The trained machine learning model for the dental condition 400 receives as input a number N of data points $401$ ($x_1, x_2, ..., x_N$). The $N$ data points 401 may be $N$ points of a 3D point cloud, of the data points may be $N$ facets of a triangulated mesh, or the data points may be $N$ vertices of a triangulated mesh, or the data points may be $N$ pixels, or the data points may be $N$ voxels. In general, the $N$ data points may be any data suitable to describe a surface of the dental object in 3D space and/or suitable to describe an internal volume of the dental object in 2D or 3D space. For each data point $x_i$ 406, the trained machine learning model 400 outputs a probability $P_i$ 408, where the index i = [1, ..., $N$]. Said probability $P_i$ 408 may be a vector, and each element of the vector may be a probability that the dental condition is present in that data point with a specific severity level, wherein the latter is a number on a predefined scale of severity 402 of the dental condition. Therefore, the probability $P_i$ 408 comprises as many elements ad the number of severity levels on the predefined scale of severity of the dental condition 402. In general, the scale of severity of a specific dental condition comprises numbers, and each of said numbers quantifies the severity of the specific dental condition. For example, referring to Figure 4, the scale of severity 402 may comprise the numbers 0 (407a), 1(407b), 3(407c), 9(407d), corresponding to an absence of the dental condition, an initial dental condition, a moderate dental condition and a severe dental condition, respectively. Thus, the probability $P_i$ 408 which is output for each data point $x_i$ 406 by the trained machine learning model 400 may be a vector $P_i = [P_{i0}\ P_{i1}\ P_{i3}\ P_{i9}]$, wherein $P_{i0}$ is the probability 403a that the dental condition is present in the data point $x_i$ with the severity level 0 407a, $P_{i1}$ is the probability 403b that the dental condition is present in the data point $x_i$ with the severity level 1 407b, $P_{i3}$ is the probability 403c that the dental condition is present in the data point $x_i$ with the severity level 3 407c, and $P_{i9}$ is the probability 403d that the dental condition is present in the data point $x_i$ with the severity level 9 407d. Here, the data point $x_i$ 406 is any of the $N$ data points 401, i.e. $i$ = [1,..,$N$].

Accordingly, with reference to Figure 4, the output of the trained machine learning model 400 for the data point $x_1$ is a vector of probabilities 408 $P_1$ = [0.1 0.2 0.3 0.4], wherein 0.1 is the probability 403a for $x_1$ to be associated with the severity level 0 407a of the dental condition, 0.2 is the probability 403b for $x_1$ to be associated with the severity level 1 407b of the dental condition, 0.3 is the probability 403c for $x_1$ to be associated with the severity level 3 407c of the dental condition, and 0.4 is the probability 403d for $x_1$ to be associated with the severity level 9 407d of the dental condition. Similarly, the output of the trained machine learning model 401 for the data point $x_2$ is a vector of probabilities 408 $P_2$ = [0.1 0.4 0.3 0.2], wherein 0.1 is the probability 403a for the data point $x_2$ to be associated with the severity level 0 407a of the dental condition, 0.4 is the probability 403b for the data point $x_2$ to be associated with the severity level 1 407b of the dental condition, 0.3 is the probability 403c for the data point $x_2$ to be associated with the severity level 3 407c of the dental condition, and 0.2 is the probability 403d for the data point $x_2$ to be associated with the severity level 9 407d of the dental condition. Similar arguments are held for all the remaining N-2 data points in 401. Therefore, the output of the trained machine learning model 401 for the input $N$ data points is the set of vectors 403:

$$x_1 \rightarrow P_1 = [0.1\ 0.2\ 0.3\ 0.4]$$

$$x_2 \rightarrow P_2 = [0.1\ 0.4\ 0.3\ 0.2]$$

$$x_3 \rightarrow P_3 = [0.1\ 0.2\ 0.4\ 0.3]$$

$$.$$

$$.$$

$$.$$

$$x_N \rightarrow P_N = [0.1\ 0.2\ 0.3\ 0.4]$$

The maximum probability in the vector of probabilities 408 estimated for each data point $x_i$ 406 is then determined in 404 for each data point 406, namely:

$$P_1^{Max} = \max P_1 = \max[0.1\ 0.2\ 0.3\ 0.4] = 0.4$$

$$P_2^{Max} = \max P_2 = \max[0.1\ 0.4\ 0.3\ 0.2] = 0.4$$

$$P_3^{Max} = \max P_3 = \max[0.1\ 0.2\ 0.4\ 0.3] = 0.4$$

.

.

.

$$P_2^{Max} = \max P_2 = \max[0.1\ 0.4\ 0.3\ 0.2] = 0.4$$

Accordingly, each data point $x_i$ 406 is assigned with a severity level 405 of the dental condition, wherein for each data point the severity level 405 is the severity level for which the maximum probability 404 is determined for that data point. For example, the maximum probability 404 $P_1^{Max} = 0.4$ determined for $x_1$ is the probability that the dental condition is present in the data point $x_1$ with a severity level 9. Accordingly, the severity level 405 $S_1$ = 9 is determined for the data point $x_1$. Similarly, the maximum probability 404 $P_2^{Max} = 0.4$ determined for $x_2$ is the probability that the dental condition is present in the data point $x_2$ with the severity level 1. Accordingly, the severity level 405 $S_2$ = 1 is determined for the data point $x_2$. Similar arguments hold for all the N data points in 302, such that the severity levels 405:

$$S_1 = 9$$
$$S_2 = 1$$
$$S_3 = 3$$

.

.

.

$$S_N = 9$$

are determined for the N data points 401 input in the trained machine learning model 400.

The numbers 0, 1, 3, 9 are used in the example illustrated in Figure 4 just for illustrative purposes of an embodiment of the trained machine learning model according to the present disclosure. In practice, the numbers defining the scale of severity of the dental condition may be chosen by a dental practitioner, or by any other dental expert, based on a clinical significance of the specific dental condition and/or based on the clinical features of that condition. For example, the scale of severity for each dental condition may comprise four numbers corresponding to an absence of the dental condition, an initial stage of development of the dental condition, a moderate stage of development of the dental condition and a severe stage of development of the dental condition, respectively. In this example, the dental expert may infer that caries are more clinically significant than plaque, e.g. because caries may cause the development of other dental conditions. Thus, the dental expert may decide to define a scale of severity for caries containing larger numbers than the scale of severity for plaque, e.g. the scale of severity for caries may be chosen to comprise the numbers (0, 4, 9, 16) and the scale of severity for plaque may be chosen to comprise the numbers (0, 1, 2, 3), corresponding to absent, initial, moderate and severe levels, respectively. Accordingly, if a presence of initial caries is determined for a first data point and a presence of a severe plaque is determined for a second data point, the first data point will be assigned with the severity level 4 and the second data point with the severity level 3, such that a higher clinical significance will be assigned to the first data point than to the second data point. In yet another example, the scale of severity comprises an indication of an absent dental condition (N), initial stage of development (I), moderate stage of development (M) and severe stage of development (S). The scale of severity defined by the dental practitioner may be input to one or more processors, e.g. the processor(s) of a computer system performing the method described herein. The method described herein may further or alternatively comprise a predefined scale of severity for each dental condition. The severity levels 405 may be stored as augmentation data of the plurality of data points 401.

The trained machine learning model 400 may be a pre-trained machine learning model that has been trained using a training data set comprising data points similar to the plurality of data points 401, wherein the training data set also comprises information about features of each data point of the training data set. For example, the features may be the presence or absence of caries for each data point in the training data set for the trained machine learning model for caries, and the features may be the presence or absence of cracks for each data point in the training data set for the trained machine learning model for tooth cracks, and so forth for each dental condition in the first set of dental conditions. In another example, the features may be the presence or absence of proximal caries for each data point in the training data set for the trained machine learning model for proximal caries, and the features may be the presence or absence of periapical radiolucency for each data point in the training data set for the trained machine learning model for periapical radiolucency, and so forth for each dental condition in the second set of dental conditions. In yet another example, the machine learning model 400 may be a trained bimodal model which has been trained with at least two different sets of data points, e.g. a set comprising 3D surface data and a set comprising 2D x-ray data, or 3D CBCT data. The at least two different sets of data points may each further comprise features about the data points in each set of training data set. In all the above mentioned cases, the features may further or alternatively represent a severity label, and/or size, and/or area and so forth of each dental condition.

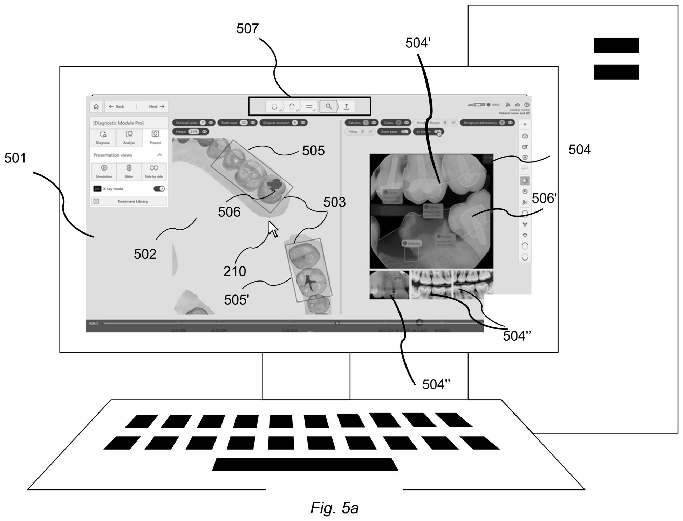

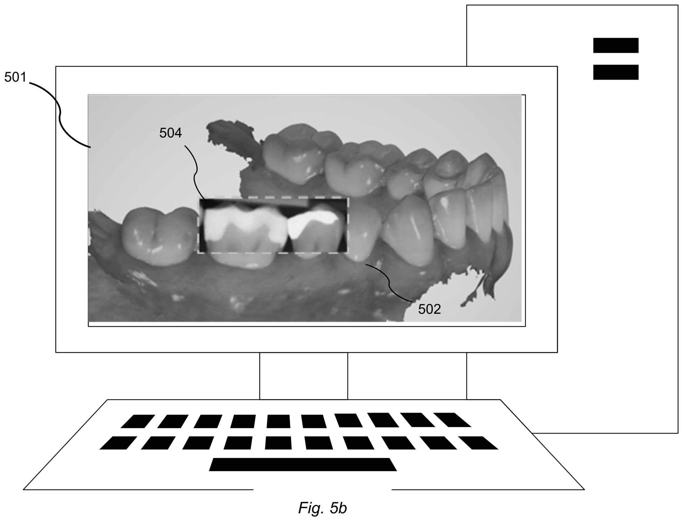

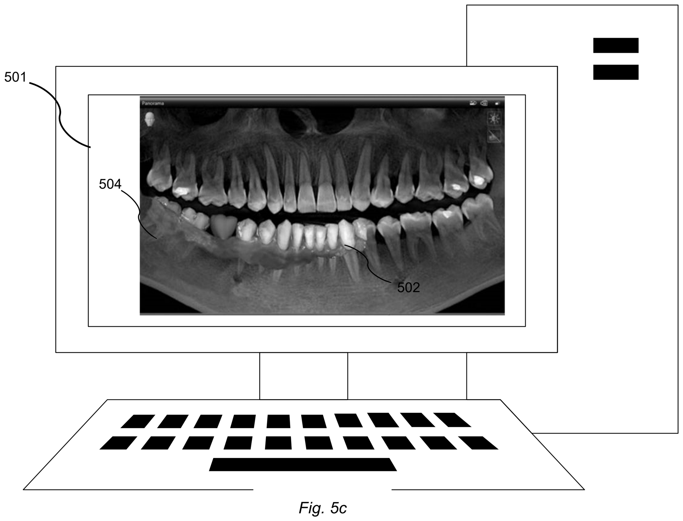

Figure 5a, 5b, and 5c illustrate examples of a visualization on a graphical-user interface (GUI) of the computer-implemented method disclosed herein. In one example, the GUI 501 may be a desktop of a computer system on which the method is executed, such as the display unit indicated as reference number 206 in Figure 2. In another example, the GUI 501 may be a web user interface, such that the dental practitioner may access at least a part of the data relating to a patient through an online database and/or through a cloud storage. In yet another example, the GUI is a screen of a portable electronic device such as the screen of a phone, the screen of a tablet, the screen of a smartwatch, and so forth. First data representing a three-dimensional (3D) surface of a dental object may be obtained, e.g. upon loading the first data from a local storage unit on which the first data may be stored, and/or downloading the first data from a remote storage unit such as an online database, a cloud storage unit, and so forth. Similarly, second data representing an internal volume of the dental object may be obtained, e.g. upon loading the second data from a local storage unit on which the second data may be stored, and/or downloading the second data from a remote storage unit such as an online database, a cloud storage unit, and so forth.

In general, both the first data and the second data may be accessed through a local storage unit, or both the first data and the second data may be accessed through a remote storage unit, or a combination of both, e.g. the first data may be accessed through a local storage unit and the second data may be accessed through a remote storage unit or vice versa. The first data may be 3D surface data describing a 3D geometry of the surface of the dental object, i.e. the first data may be a digital 3D surface model of the dental object. The second data may be two-dimensional (2D) data comprising one or more X-ray images of the dental object, and/or one or more infrared images of the dental object, and/or the second data may be 3D data comprising one or more CBCT scan images.

The first data and/or the second data may be first rendered in the GUI 101. For example, the digital 3D model of the dental object may be rendered in the GUI, and the one or more X-ray images of the dental object may be further or alternatively rendered in the GUI. The user may then select a desired inspection site 503 of the dental object based on the rendering of the first data and/or based on the rendering of the second data. For example, the desired inspection site 503 may be selected upon clicking or hovering by means of a cursor 210 on the desired inspection site in the rendering of the first data. Alternatively, the user may select the desired inspection site by drawing a selection box 505 around the desired inspection site 503, wherein the selection box may have a predefined geometrical shape and a size which may be changed by the user, or the selection box may be freely drawn by dragging the cursor 505 around the desired inspection site 503.

The user selection of the desired inspection site 503 may be received as an input, e.g. by the computer system on which the computer-implemented method of the present disclosure is executed. As a result of the input, a first view 502 and a second view 504 are displayed in the GUI 501. The first view 502 comprises a part of the first data corresponding to the desired inspection site 503, and the second view 504 comprises a part of the second data corresponding to the desired inspection site. Referring to the example illustrated in Figure 5a, the first view 502 comprises the part of the digital 3D model corresponding to the desired inspection site 503, and the second view 505 comprises the part of the one or more X-ray image corresponding to the desired inspection site 503. In the example illustrated in Figure 5a, the second view 505 may comprise four different types of X-ray images comprising the desired inspection site: a bitewing x-ray image 504' comprising the desired inspection site is displayed in the upper panel of the second view 505; the parts of the panoramic X-ray image of the dental object comprising the desired inspection site 504" are shown in the middle and right side of the lower panel in the second view 505, and a periapical image 504‴ comprising the desired inspection site is shown in the right side of the lower panel of the second view 505. It will be appreciated by those skilled in the art that any other type of x-ray image comprising the desired inspection site may be comprised in the second view 504, or that the second view 504 may comprise only one type of x-ray image, or further that the second view 504 may comprise one or more infrared images comprising the desired inspection site. In other words, corresponding and/or overlapping parts of the first data and of the second data are determined accordingly to the method disclosed herein, and said corresponding parts are displayed in the GUI. Furthermore, the user may select the view of the part of first data corresponding to the desired inspection site that they want to visualize, e.g. in a selection/tool bar displayed in the GUI. For example, they may want to visualize an occlusal view of the part of the first data corresponding to the desired inspection site, a buccal view of the part of the first data corresponding to the desired inspection site, a lingual view of the part of the first data corresponding to the desired inspection site, a bite view of the part of the first data corresponding to the desired inspection site, and so forth. Accordingly, the first view 502 will comprise the selected/preferred view of the part of the first data corresponding to the desired inspection site.

With reference to the example illustrated in Figure 5a, the user has selected the teeth group within the selection box 505 and the teeth group in the selection box 505'. The user may have selected the option to visualize the occlusal view of the part of the teeth group within the selection box 505 and the teeth group within the selection box 505'. Accordingly, the first view 502 comprises the occlusal view of the part of the 3D model corresponding to the teeth group 505 and the part corresponding to the teeth group 505', and the second view 104 comprises the part of the X-ray images corresponding to the teeth group 505 and the teeth group 505'. In another example (not shown here), the user may select only a specific tooth. In this example, the method would determine the part of the 3D model corresponding to the selected region, i.e. the part of the 3D model representing the specific tooth, and the part of the X-ray image corresponding to the selected region, i.e. the part of the X-ray image representing the specific tooth. Accordingly, a first view of the tooth in the 3D model and a second view of the tooth in the X-ray image would be displayed in the GUI. In other words, the first view 502 and the second view 504 are synchronized, such that parts of the first data and of the second data corresponding to the same part of the dental objects are comprised in the first view 502 and in the second view 504.

The first data, i.e. the digital 3D model in the example illustrated in Figure 5a, may be augmented with first augmentation data indicative of an estimated presence of a first set of dental conditions in the 3D model. Similarly, the second data, i.e. the one or more X-ray images in the example illustrated in Figure 5a, may be augmented with second augmentation data indicative of an estimated presence of a second set of dental conditions in the X-ray images. Thus, as illustrated in Figure 5a, the first view 502 comprises a visual indication 506 of one or more dental conditions in the first set of dental conditions which are associated with the desired inspection site. For example, the association between the one or more dental conditions in the first set of dental conditions and the desired inspection site may be based on the first augmentation data. Similarly, the second view 504 comprises a visual indication 506' of one or more dental conditions in the second set of dental conditions which are associated with the desired reinspection site. The association between the one or more dental conditions in the second set of dental conditions and the desired inspection site may be based on the second augmentation data. The visual indications 506 and 506' may comprise a different color for each dental condition, and each color may be overlayed on the part of the 3D model and/or on the part of the X-ray image corresponding to the desired inspection site, as illustrated in the example in Fig. 5a. In another example, the visual indication may be a pattern overlayed on the corresponding parts in the 3D model and in the X-ray image. In yet another example, the visual indication may be a window which pops-up when the user hovers on clicks on the desired inspection site by means of the cursor 210, and the window may comprise a list of the one or more dental conditions associated with the desired inspection site.

In one example (not illustrated here), the user may deactivate the displaying function of the visual indications in the first view and/or of the visual indications in the second view, for example by selecting a command in a tool bar 507 displayed in the GUI together with the first view 502 and the second view 504. In this way, the user may visualize the part of the 3D model corresponding to the desired inspection site and the part of the X-ray corresponding to the desired inspection site without any diagnostic information.

In the example illustrated in Figure 5a, the first view 502 and the second view 504 are displayed in a side-by-side view in the GUI 501. However, further or alternative view modalities of the first view 502 and of the second view 504 may be possible. These view modalities may be selected by the user, or they may be predefined features of the method disclosed herein.

Figure 5b illustrates an alternative viewing modality of the first view 502 and second view 504. A location of the part of the 2D X-ray image comprising the desired inspection site with respect to the part of the 3D model comprising the desired inspection site in a common 3D scene may be determined. The location may refer to a position and an orientation of the 2D X-ray image relative to the 3D dental surface. Based on the determined relative location, the part of the X-ray image corresponding to the desired inspection site may be superimposed or overlayed onto the part of the 3D model corresponding to the desired inspection site, as illustrated in Fig. 5b. In other words, the part of the X-ray image corresponding to the desired inspection site is displayed in front of the corresponding part of the 3D model, i.e. in front of the corresponding group of teeth, as some dentists may find this view most useful. The GUI could enable the user to have the second view 504 aligned with the first view 502 anywhere in the GUI, e.g. the aligned X-ray image may appear as a pop-up window in the GUI when the user clicks or hovers on the part(s) of the 3D model for which a corresponding X-ray image counterpart exists.

In another example, the first view 502 may be overlayed or superimposed onto the second view 504. In the example illustrated in Figure 5c, the part of the 3D model corresponding to the desired inspection site is overlayed or superimposed onto the part of the X-ray image corresponding to the desired inspection site.

In all the examples illustrated in Figure 5a, 5b, and 5c, the user may activate and deactivate, through the GUI 501, the visual indications of the dental conditions associated with the desired inspection site. For example, the visual indications may be activated in the first view 502 and deactivated in the second view 504, or vice versa, or the visual indications may be deactivated in both view, such that the user can directly compare 3D surface data of the dental object with corresponding x-ray data, or infrared data, or CBCT data.

In another example (not illustrated here) the first view 502 may comprise a 3D height map representing a difference between a first 3D model of the dental object and a second 3D model of the dental object, wherein the first 3D model may have been obtained in a clinical visit of the patient at a first time and the second 3D model may have been obtained in a clinical visit of the patient at a second time, wherein the first time may be antecedent to the second time. The height map may highlight one or more differences between the two 3D digital models, e.g. differences in a position of one or more teeth, or differences in the size of one or more teeth which may e indicative of tooth wear, or any other difference between the two or more 3D models which may be of clinical interest. In yet another example (not illustrated here), the first view 502 may comprise a cross-sectional comparison between the first 3D model of the dental object and the second 3D model of the dental object. Accordingly, the user may compare the differences in the two 3D models obtained at two different points in time with the corresponding part on the second data, e.g. the corresponding part of the x-ray/CBCT images in the second view 504. This may be useful, for example, to get diagnostic information about tooth wear in the dental object.

Furthermore, in all the examples illustrated in Figures 5a, 5b and 5c, the first view 502 and the second view 504 are synchronized. In a preferred example, the first view 502 and the second view 504 may be bidirectionally synchronized. Therefore, every time the user selects a new inspection site 503, the first view 502 and the second view 504 are simultaneously updated to display the part of the first data comprising the new inspection site 503 and the part of the second data comprising the new inspection site 503, respectively. For example, the new desired inspection site 503 may correspond to the lower incisors. Accordingly, the part of the first data corresponding to the lower incisors may be determined to update the first view 502 to comprise the lower incisors, and the part of the second data corresponding to the lower incisors may be determined to update the second view 504 to comprise the lower incisors. The desired inspection site 503 may be selected either on the rendering of the first data, and/or the desired inspection site 503 may be selected on the rendering of the second data. In either case, both views will be updated to display the same selected inspection site, and in this sense the synchronization between the first view 503 and the second view 504 is bidirectional. This bidirectional synchronization between the first view and the second view may be achieved upon determining a spatial relationship between at least a part of the first data and at least a part of the second data. In one example, the spatial relationship may be determined by using the first augmentation data and the second augmentation data. For example, the first augmentation data and the second augmentation data may both comprise a tooth number associated with each tooth in the first data and in the second data, respectively. For example, the user may select the lower incisors, e.g. by clicking the lower incisors in the rendering of the first data or in the rendering of the second data. The lower incisors are associated with the numbers 24 and 25 according to the ISO 3950 system for tooth numbering, and accordingly the first augmentation data may be used to determine the parts of the first data labelled with the tooth numbers 24 and 25, and the second augmentation data may be used to determine the parts of the second data labelled with the tooth number 24 and 25. In another example, the spatial relationship between the at least a part of the first data and the at least a part of the second data may be determined upon processing the first data and the second data by using a registration-like algorithm, which is e.g. configured to determine a registration matrix between 3D surface data and 2D X-ray images. For example, a 2D projection of the first data may be generated, and a pose of the at least a part of the first data relative to at least a part of the one or more 2D X-ray images may be estimated by optimizing an agreement between the 2D projection of the first data and the one or more 2D X-ray image. Accordingly, a transform defining the spatial relationship may be determined based on the estimated pose. The 2D projection may for example comprise a rendered silhouette or occluding contour of the first data in a viewing direction of the one or more 2D X-ray images. The optimizing may comprise minimizing a contour distance between one or more geometric boundaries of the dental object extracted from the one or more 2D X-ray images and the rendered silhouette or occluding contour of the first data. To avoid local minima and maximizing the convergence speed, one or more dental landmarks in the at least a part of the first data and in the at least a part of the one or more 2D X-ray images may be determined, and the estimated pose may be initialized using the one or more dental landmarks.

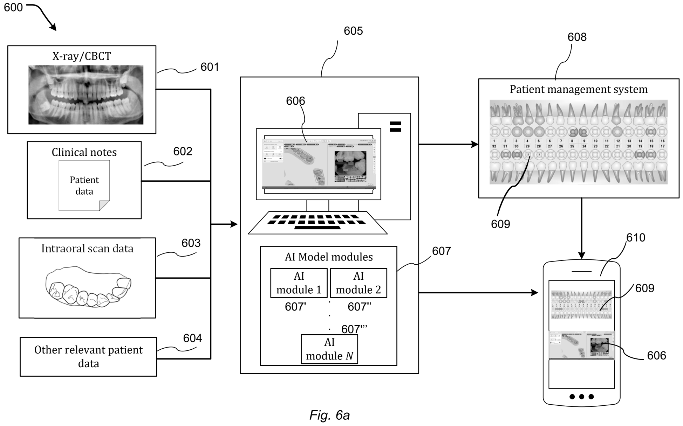

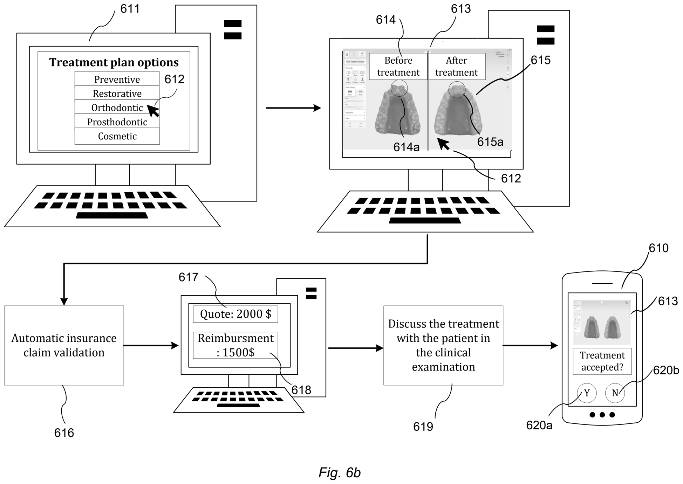

Figures 6a and 6b illustrate examples of a workflow according to the present disclosure. Data relative to a patient's dental object may be stored on a same storage unit, or on one or more different storage units, wherein each storage unit may be a local storage unit of a computer system 605, or each storage unit may be a remote storage unit. The data may comprise information about the dental object of the patient in the form of images, e.g. 3D or 2D images, pictures, metadata, file text, audio texts, and so forth. The data may have been acquired at the same point in time, or at different points in time, e.g. during different clinical visits of the patient which may have taken place in the same dental studio, or in different dental studios, or in a dental studio and another clinic equipped with x-ray/CBCT devices. With reference to the example illustrated in Figure 6, the data comprises one or more 2D X-ray images and/or CBCT scan images of the dental site of the patient 601. The data may further or alternatively comprise one or more clinical notes 602, e.g. notes written by a dental practitioner about the results of one or more previous clinical examinations of the patients, such as the results related to the oral health of the patient. The data may further or alternatively comprise intraoral scan data 603, such as 2D images of the patient's dental object acquired by means of an intraoral scanning device, and/or images obtained upon illuminating the dental object with light in the infrared domain, and/or digital 3D model(s) of the patient's dental object, and/or any other data describing the dental object which can be acquired by means of an intraoral scanning device. The data may further or alternatively comprise any other relevant data related to the patient's dental object, e.g. pictures of the patient's smile acquired by a camera, and/or data related to the bite of the patient, audio texts recorded by a dental practitioner during a clinical visit of the patient, and so forth. The data may further or alternatively comprise one or more audio files recorded during a clinical examination of the patient. The one or more audio files may comprise any of one or more of a recording of a discussion of the dental practitioner with the patient about the patient's oral health, a recording of the patient discussing their oral health, such as any pain or discomfort they may have in their mouth, and/or discussing a set of aesthetic preferences about their teeth, such as a shade of their teeth or an alignment of their teeth, and/or a recording of the dental practitioner commenting a result of an in-mouth examination of the patient. The audio files may be automatically generated during the clinical examination of the patient, upon creating a new patient's case or upon opening an existing patient's case in a patient management system 608. For example, when the patient sits in the chair of the dental clinic and the dental practitioner opens the existing patient's case or creates a new patient's case in the patient management system 608, a recording may be automatically initiated, e.g. by activating a microphone which may be the microphone integrated in the computer system on which the method of the present disclosure is executed or it may be an external microphone device configured to transmit the recording to the patient management system 608.

The data related to the patient's dental object is obtained by a computer system 605, e.g. upon uploading each type of data from the one or more storage unit on which the corresponding type of data is stored. The computer system 605 may comprise one or more Artificial Intelligence (AI) Model Modules 607, which are configured to process the obtained data to extract relevant information related to the dental object, e.g. information about the presence of one or more dental conditions in the oral object, and/or information about the development of one or more dental conditions in the oral object, and so forth. For example, the AI model modules 607 may comprise an AI module 1 607' configured to receive as an input the intraoral scan data 603, and generate an output comprising segmented tooth surface information and segmented gingiva information. The AI model modules 607 may further comprise an AI module 2 607" configured to receive as an input the intraoral scan data 603 and generate an output comprising an estimated presence of one or more dental conditions in the scan data 603. The AI modules 607 may further comprise an AI module configured to receive the one or more audio files and to convert them into one or more text files, e.g. based on an automatic speech recognition (ASR) algorithm. The AI modules 607 may further comprise an AI module configured to receive as an input the one or more text files and to generate an output comprising an estimated presence of one or more dental conditions in the patient's dental object, and/or a recommended treatment plan to achieve the aesthetic preferences of the patient. The AI model modules 607 may further comprise an AI module N 607''' configured to receive as an input the x-ray/CBCT data 601 and to generate an output comprising segmented tooth volume data and segmented periodontal volume data. In general, the AI model modules 607 may comprise N AI modules, and each of the N AI modules may be configured to receive as an input a specific set of data, to process said data and to generate an output describing one or more properties extracted from the specific set of data, e.g. properties related to the oral health of the dental object described by the specific set of data. In another example, the AI model modules 507 may comprise only one trained model which is configured to process two or more specific set of data, e.g. intraoral scan data and X-ray data, and/or intraoral scan data, X-ray data and patient data and so forth. For example, the one trained model may be configured to receive as an input a combination of any one or more of X-ray/CBCT data 601, clinical notes 602, intraoral scan data 603 and other relevant patient data 604, and to output diagnostic predictions related to the dental object. In yet another example, the data 601, 602, 603, 604 already comprise augmentation data comprising diagnostic indications, and/or segmented surface or volume data, and/or any other relevant information for determining the oral health of the patient.

The computer system 605 may further comprise a graphical user interface (GUI) which may enable to display a visual representation 606 of at least a part of the results of the processing performed by the AI model modules 607. The GUI may be a display unit, or it may be a web user interface, or a combination of both. For example, the visual representation 606 may comprise a rendering of the intraoral scan data 603 with overlayed a visual representation of the one or more dental conditions detected in the intraoral scan data 603. The visual representation 606 may further of alternatively comprise a rendering of the X-ray image(s) with overlayed a visual representation of the one or more dental conditions detected in the x-ray image(s) 601. The visual representation 606 may further or alternatively comprise a rendering such as the ones described in Figures 5a, 5b and 5c. The visual representation 606 may comprise a 3D height map representing a difference between two digital 3D models of the dental object obtained at two different points in time, and/or the visual representation 606 may comprise a cross-sectional comparison between two digital 3D models of the dental object obtained at two different points in time. In general, the visual representation 606 may comprise any relevant information at least partially obtained by processing one or more specific sets of data by using the AI model modules 607.

The results of the AI model modules 607 may be further transmitted to the patient management system 608. For example, the patient management system may be an application or software installed on the computer system 605, or the patient management system may be comprised in a cloud network configured to receive data from the computer system 605, or it may be a combination of both. The patient management system 608 may be configured to receive the output of the AI model modules 607 and the data 601, 602, 603, 604, and any other data relevant for the oral health of the patient, such as the one or more audio files. The patient management system 608 may be further configured to access a patient specific clinical file 609 and to fill-in the clinical file 609 with a part of or all of the available information related to the overall patient's oral health. The fill-in may be automated in the patient management system 608, or the fill-in may be manually performed by a user enabled to access the patient management system 608. The patient management system 608 may be further configured to access the patient specific clinical file 609 and to automatically fill-in a Subjective, Objective, Assessment and Plan (SOAP) report with a part of or all the available information related to the overall patient's oral health. For example, the clinical file 609 may comprise a dental chart, and each digital tooth of the dental chart may be associated with information related to the health status of the tooth. Said information may be based on the information obtained by the AI model modules 607, or it may be based on the data 601, 602, 603, 604, or on any other available data related to the tooth health. For example, each tooth may be associated with information related to the diagnostic results obtained for the tooth by the AI module 1 607', and/or by the AI module 2 607", and so forth, up to the results obtained for the tooth by the AI module N 607'''. For example, for tooth number 8 the AI model module 1 607' may determine a presence of caries and plaque and the AI module 2 607" may determine a presence of periapical radiolucency. Accordingly, information relative to the presence of caries, plaque and periapical radiolucency may be stored in digital tooth 8 of the dental chart. Furthermore, x-ray images, and/or CBCT images, and/or intraoral scan data, and/or 3D models, and/or clinical notes related to digital tooth 8 may be stored in digital tooth 8 of the dental chart. Furthermore, a comparison between a first view comprising the 3D model of digital tooth 8 and a second view comprising the x-ray image of digital tooth 8 may be stored in tooth 8 of the dental chart, e.g. as a side-by-side view of the 3D model and the x-ray image. In this way, the dental practitioner may access the patient management system 608 at each patient's clinical visit, for example to inspect the development and/or the regression of one or more dental conditions, and/or to compare different data sources relating to one or more teeth of the patient. The patient management system 608 may also generate one or more treatment recommendation(s)/plan(s) based on the information stored thereon. The patient management system 608 may use a trained machine learning model, such as a deep learning model, which is configured to process the information stored on the patient management system 608 and to output the one or more treatment recommendation(s)/plan(s) for the patient. For example, the trained machine learning model may receive as input one or more of the output of the AI model modules 607 and the data 601, 602, 603, 604, and any other data relevant for the oral health of the patient, such as the one or more audio files, and output the treatment recommendation(s)/plan(s) based on said input. In general, the patient management system 609 may be accessed by a plurality of clinics, and each of the plurality of clinics may be responsible for obtaining, analyzing and/or managing one or more of the data 601, 602, 603, and 604.

The patient management system may further be accessed through a smartphone or tablet, e.g. a patient's smartphone. For example, the patient may visualize, on a screen of the portable device 610, a visual representation 606 of at least a part of the output of the AI model modules 607, and/or a visual representation 609 of the database filled-in by the patient management system 608. The patient may therefore be informed about a progress of their oral health, and they may accordingly plan their next dental examination and/or take some daily actions to improve their oral health, e.g. by brushing their teeth in a specific manner if the presence of severe plaque is detected.

Figure 6b illustrates an example of a continuation of the workflow illustrated in Figure 6a. As discussed above, the patient management system 608 may generate one or more treatment recommendations/plans 611 based on the processing of the data 601, 602, 603, 604 and on the output 607 of the AI model modules. For example, the one or more treatment recommendation(s) and/or plan(s) 611 may comprise any of one or more of preventive recommendation(s)/plan(s), restorative recommendation(s)/plan(s), orthodontic recommendation(s)/plan(s), prosthodontic recommendation(s)/plan(s), and/or cosmetic recommendation(s)/plan(s). Each of the one or more treatment recommendation(s)/plan(s) 611 may comprise a treatment of a patient's single tooth, e.g. a restorative plan may comprise designing and manufacturing a dental restoration such as a crown for a tooth of the patient. Additionally or alternatively, each of the one or more treatment recommendation(s)/plan(s) 611 may comprise a treatment of a plurality of teeth of the patient at the same time, e.g. an orthodontic plan may comprise aligning a plurality of teeth at the same time, such as two teeth at the same time, or all the teeth of a jaw of the patient.

A list of the one or more treatment recommendation(s)/plan(s) 611 may be displayed to the dental practitioner, e.g. on a display of a computer system on which the method of the present disclosure is executed, or the display of the computer system in the dental clinic where the clinical examination of the patient is carried out. Accordingly, the dental practitioner may select the treatment recommendation/plan they want to further inspect, e.g. by clicking with a cursor 612 on the desired treatment recommendation/plan in the displayed list of the one or more treatment recommendation(s)/-

plan(s) 611. In general, the desired treatment recommendation/plan may be selected by means of any suitable input form, e.g. by inputting a name or code of the desired treatment recommendation/plan by using a keyboard, or by touching with a finger the desired treatment recommendation/plan when the display is a touchscreen.

Based on the user input, a graphical representation of the selected treatment recommendation/plan may be displayed on the display of the computer system on which the method of the present disclosure is executed. With reference to the example illustrated in Figure 6b, the dental practitioner may select the "Orthodontic" plan from the displayed list of treatment recommendation(s)/plan(s) 611. Accordingly, a graphical representation of the automatically determined orthodontic treatment plan 613 may be displayed. For example, the graphical representation may comprise a digital 3D model of the patient's teeth before the treatment 614 and a digital 3D model of the patient's teeth which is expected after the treatment 615. With reference to the example illustrated in Figure 6b, the orthodontic treatment plan comprises the alignment of the two central incisors 614a (614b). Accordingly, the graphical representation of the selected orthodontic treatment plan 613 comprises a digital 3D model of the upper jaw of the patient before treatment 614, wherein the two central incisors before treatment 614a are misaligned, and a digital 3D model of the lower jaw of the patient after treatment 615, wherein the two central incisors after treatment 615a are aligned. The graphical representation of the selected treatment recommendation/plan may further comprise one or more instructions and steps to perform the selected treatment recommendation/plan (not illustrated here), e.g. an instruction to apply braces to the patient's upper jaw to align the two central incisors. The graphical representation of the selected treatment recommendation/plan may further comprise an estimated duration of the treatment, and/or one or more recommended actions to be performed by the patient during the treatment. For example, the recommended actions may comprise the recommendation to brush the teeth after every meal when wearing braces, and/or the recommendation of smoking cessation, dietary counselling for the patient to reduce the risk of bacteria development, information on parafunctional habit interventions and so forth. The graphical representation of the selected treatment recommendation/plan may further comprise any other relevant information for ensuring a successful and smooth treatment for the patient.

An automatic insurance claim validation 616 may be performed for the selected treatment recommendation/plan. Accordingly, a quote 617 and an expected insurance reimbursement 618 may be automatically generated and displayed, e.g. on the display of the computer system executing the method disclosed herein. For example, the automatic insurance claim validation 616 may be performed by using a trained AI module which is configured to receive as input the treatment recommendation/plan and to validate the insurance claim based on the received input. The trained AI module may be further configured to generate an estimation of the quote 617 of the selected treatment plan and an estimation of the expected insurance reimbursement 618. In a step 619, the graphical representation of the selected treatment plan/recommendation 613 may be shown by the dental practitioner to the patient and discussed with the patient, together with the automatically estimated quote 617 and insurance reimbursement 618.

In one example, the patient may decide to accept the treatment plan during the clinical examination. In this case, the dental practitioner may annotate that the treatment plan has been accepted, e.g. in a clinical note such as the one indicated with reference number 602 in Figure 6a.

Accordingly, the patient management system 608 may be automatically updated or manually updated by the dental practitioner to load the information about the patient accepting the treatment and the corresponding accepted treatment recommendation/plan. Furthermore, the graphical representation of the treatment recommendation/plan 613 may be loaded to the patient management system 608. The quotes 617 and the insurance reimbursement 618 may also be loaded to the patient management system 608.

In another example, the patient may decide to leave the clinic and to think about whether they want to start the treatment. Accordingly, the patient may access the patient management system 608, e.g. through a smartphone or tablet. For example, the patient may visualize on the screen of the portable device 610 the graphical representation of one or more treatment recommendation(s)/plan(s) 613, such as a digital model of their teeth before and after the treatment. The patient may further visualize on the screen of the portable device 610 a list of treatment recommendations, such as preventive recommendations, e.g. the recommendations may comprise the recommendation to brush the teeth after every meal when wearing braces, and/or the recommendation of smoking cessation, dietary counselling for the patient to reduce the risk of bacteria development, information on parafunctional habit interventions and so forth.

The patient may be given the possibility to select whether they accept the treatment or reject the treatment, e.g. by clicking/touching a selection window to accept the treatment 620a or by clicking/touching a selection window to reject the treatment 620b. If the patient accepts the treatment, the dental practitioner may be automatically notified by the patient management system 608 and they may send instructions to the patient, e.g. about a fixed date of a clinical visit to start the treatment, through the patient management system. If the patient rejects the treatment, the rejected treatment recommendation(s)/plan(s) may be automatically loaded or manually loaded by the dental practitioner to the patient management system 608. For example, missed treatment opportunities may be flagged in the patient management system 608, such that the dental practitioner may follow up the rejected treatment recommendation in the subsequent clinical examinations. A notification about recommended follow up clinical examinations may be further sent to the patient through the patient management system 608.

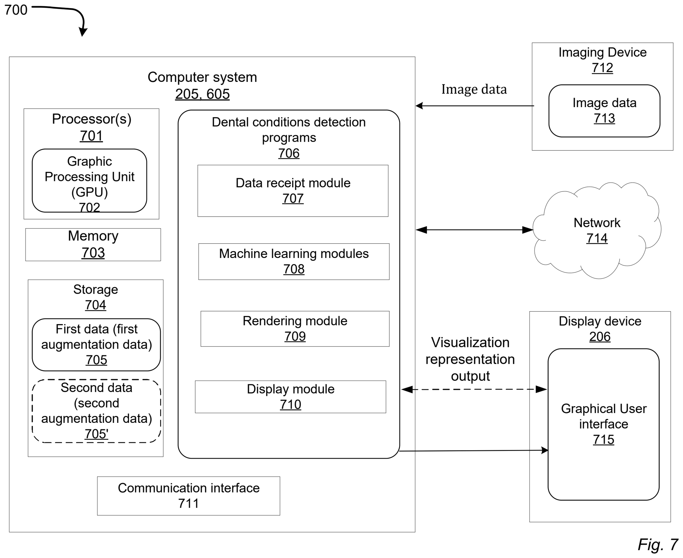

Figure 7 illustrates a schematic representation of a system 700 according to the present disclosure. The system 700 comprises a computer system 205, comprising a communication interface 711 which enables the computer system 205 to exchange data with other devices. For example, the computer system 205 may be configured to receive and send data to an intraoral scanner as the one illustrated as reference number 201 in Figure 2. The computer system 205 may comprise one or more processors 701 configured to process executable instructions, e.g. provided by a computer program. The processors 701 may comprise a graphic processing unit 702 and/or be configured as a central processing unit (CPU). For example, the one or more processors 701 may be configured to process, partially or completely, the data received by the intraoral scanner to generate a 3D model representation(s) of the dental object.

The computer system 205 further comprises a display device 206, a keyboard, touchpad, a mouse or touchscreen for entering data and activating virtual buttons (user interaction elements) visualized on the display 206. The display device 206 may be a computer screen, a touchpad screen or e.g. a smart phone screen comprising a graphical user interface 715 and having a visual display. The computer system 205 may comprise a memory 703 comprising a program content executable by the processor(s) 701, the program content comprising executable instructions to perform the computer-implemented method according to the present disclosure. Further, the computer system 205 may comprise a storage media/medium 704 configured to store data such as first data representing a digital 3D surface of the dental object 705. First data 705 from a plurality of different intraoral scanners may be stored in storage 704. Furthermore, first data 705 that has been processed for using e.g. the method disclosed herein may be stored in storage 704. Second data 705' may further be stored on storage 704. For example, the second data 705' may be one or more 2D x-ray images of the dental object, and/or one or more 3D CBCT scans of the dental object, and/or one or more images of the dental object obtained upon illuminating the dental object with light in the infrared domain. Patient specific identification data, diagnostic data acquired from other scanning modalities that an intraoral scanner, and other patient relevant information may be stored in storage 704. The storage media/medium 704 may be configured as cloud storage or for example storage on multiple computer services which are configured to communicate with each other over a network 714. Processing and storage of data relevant for analysis by e.g. a diagnostic module may be performed in a cloud setup and loaded into a computer therefrom and/or performed locally. The storage 704 may also store 3D surface data generated historically for a patient, as well as 3D surface data generated during a clinical visit. Furthermore, the system 700 comprises one or more dental conditions detection programs 706, each of them configured as detection program 706 for each of one or more dental condition. Each of the diagnostic module or programs 706 comprises executable instructions for detecting a dental condition in the first data 705, and/or executable instructions for detecting a dental condition in the second data 705'. The detection programs 706 may be configured with a data receipt module 707 for obtaining first data 705, e.g. from image data 713 of an imaging device 712, such as the intraoral scanner illustrated as reference number 201 in Figure 2. The data receipt module 707 may be further configured for obtaining second data 705'. Machine learning modules 708 are configured to receive the first data 705, wherein each trained model forming a part of each machine learning modules 708 may be configured to assign severity level probabilities to each of the data points comprised in the first data 705. Machine learning modules 708 may be further configured to receive the second data 705', and each trained model forming a part of each machine learning modules 708 may be configured to assign severity level probabilities to each of the data points comprised in the second data 705'. The first data 705 may be augmented with first augmentation data based on the results of the dental condition detection programs 706, and the second data 705' may be augmented with second augmentation data based on the results of the dental condition detection program 706.

Further or alternatively, the first data 705 may already comprise the first augmentation data, and/or the second data 705' may already comprise the second augmentation data. The first augmentation data and/or the second augmentation may have been obtained through a processing of the first data 705 and/or through a processing of the second data 705' prior to the execution of the method disclosed herein.

A rendering module 709 is configured to generate a rendering of a first view comprising the part of the first data 705 corresponding to a desired inspection site of the dental object, and to generate a rendering of a second view comprising the part of the second data 705' corresponding to the desired inspection site of the dental object. In particular, the processor(s) may be configured to determine the part of the first data 705 corresponding to the desired inspection site and the part of the second data 705' corresponding to the desired inspection site. Said corresponding parts may be received by the rendering module 709 to generate the rendering of the first view and of the second view. The display module 710 may be configured to represent the rendering of the first view and the rendering of the second view, wherein the first view may comprise a visual indication of one or more dental conditions in a first set of dental conditions associated with the desired inspection site and the second view may comprise a visual indication of one or more dental conditions in a second set of dental conditions associated with the desired inspection site.

## Further details

Embodiments of the invention are disclosed in the following list of enumerated items:

1. A computer-implemented method comprising the steps of:

- obtaining first data representing a surface of a dental object, wherein the first data is three-dimensional (3D) surface data;

- obtaining first augmentation data indicating an estimated presence of a first set of dental conditions in the first data;

- obtaining second data representing an internal volume of the dental object;

- obtaining second augmentation data indicating an estimated presence of a second set of dental conditions in the second data;

- obtaining a user input indicative of a desired inspection site of the dental object;

- determining a part of the first data corresponding to the desired inspection site;

- determining a part of the second data corresponding to the desired inspection site; and

- rendering, in a graphical-user interface (GUI), a first view comprising the part of the first data corresponding to the desired inspection site with a visual indication of at least a part of the first augmentation data corresponding to the desired inspection site;

- and rendering, in the GUI, a second view comprising the part of the second data corresponding to the desired inspection site with a visual indication of at least a part of the second augmentation data corresponding to the desired inspection site.

2. The method of any of the previous items, wherein the second data is one or more two-dimensional (2D) images of the dental object.

3. The method of item 2, wherein the one or more 2D images are based on illuminating the dental object using light in the x-ray domain or using light in the infrared domain.

4. The method of any of the previous items, wherein the second data is 3D data.

5. The method of item 4, wherein the 3D data is one or more 3D Cone Beam Computed Tomography (CBCT) images of the dental object.

6. The method of any of the previous items, wherein the first augmentation data further comprises a severity level of each dental condition comprised in the first set of dental conditions.

7. The method of any of the previous items, wherein the second augmentation data further comprises a severity level of each dental condition comprised in the second set of dental conditions.

8. The method of any of items 6 or 7, wherein the severity level of each dental condition is associated with a number on a predefined scale of severity of the corresponding dental condition.

9. The method of any of items 6-8, wherein the severity level is defined based on one or more clinical aspects of the corresponding dental condition.

10. The method of any of the previous items, wherein the first set of dental conditions comprises one or more of caries, plaque, tooth crack, gum recession, tooth wear and gum inflammation.

11. The method of any of the previous items, wherein the second set of dental conditions comprises one or more of proximal caries, calculus and/or periapical radiolucency.

12. The method of any of the previous items, further comprising determining one or more dental conditions in the first set of dental conditions associated with the part of the first data corresponding to the desired inspection site.

13. The method of item 12, wherein the at least a part of the first augmentation data comprises the one or more dental conditions in the first set of dental conditions associated with the part of the first data corresponding to the desired inspection site.

14. The method of item 13, wherein the visual indication is overlayed on the part of the first data corresponding to the desired inspection site.

15. The method of item 14, wherein the overlayed visual indication comprises a color for each of the one or more dental conditions, and wherein the color is different than a rendering color of the part of the first data corresponding to the desired inspection site.

16. The method of items 14 or 15, wherein the visual indication comprises a different pattern for each of the one or more dental conditions.

17. The method of any of the preceding items, wherein the visual indication of the at least a part of the first augmentation data is displayed in the GUI upon detecting clicking and/or hovering on a rendering in the GUI of the part of the first data corresponding to the desired inspection site using a digital cursor of the GUI, and wherein the visual indication comprises a list of one or more dental conditions in the first set of dental conditions associated with the part of the first data corresponding to the desired inspection site.

18. The method of any of the previous items, further comprising determining one or more dental conditions in the second set of dental conditions associated with the part of the second data corresponding to the desired inspection site.

19. The method of item 18, wherein the at least a part of the second augmentation data comprises the one or more dental conditions in the second set of dental conditions associated with the part of the second data corresponding to the desired inspection site.

20. The method of item 19, wherein the visual indication is overlayed on the part of the second data corresponding to the desired inspection site.

21. The method of item 20, wherein the overlayed visual indication comprises a color for each of the one or more dental conditions, and wherein the color is different than a rendering color of the part of the second data corresponding to the desired inspection site.

22. The method of items 20, wherein the visual indication comprises a different pattern for each of the one or more dental conditions.

23. The method wherein the visual indication of the at least a part of the second segmentation data is displayed in the GUI upon detecting clicking and/or hovering on a rendering in the GUI of the part of the second data corresponding to the desired inspection site, and wherein the visual indication comprises a list of one or more dental conditions in the second set of dental conditions associated with the part of the second data corresponding to the desired inspection site.

24. The method of any of the preceding items, wherein the first augmentation data further comprises segmented tooth surface data and segmented gingiva surface data.

25. The method of any of the preceding items, wherein the second augmentation data further comprises segmented tooth volume data and segmented periodontal volume data.

26. The method of any of the preceding items, wherein at least a part of the first augmentation data is obtained upon processing the first data using a trained model for each dental condition in the first set of dental conditions.

27. The method of item 26, wherein the trained model for each dental condition in the first set of dental conditions is configured to receive the first data as an input and to generate an output comprising a probability that the corresponding dental condition is present in the first data.

28. The method of any of the preceding items, wherein at least a part of the second augmentation data is obtained upon processing the second data using a trained model for each dental condition in the second set of dental conditions.

29. The method of item 28, wherein the trained model for each dental condition in the second set of dental conditions is configured to receive the second data as an input and to generate an output comprising a probability that the corresponding dental condition is present in the second data.

30. The method of any of items 27 or 29, wherein the output further comprises a severity level of the corresponding dental condition.

31. The method of any of the preceding items, wherein at least a part of the first augmentation data and at least a part of the second augmentation data are obtained upon processing the first data and the second data using a trained bimodal model.

32. The method of item 31, wherein the trained bimodal model is configured to receive the first data and the second data as an input and to generate an output comprising a probability that the first set of dental conditions and the second set of dental conditions are present in the dental object.

33. The method of any of the previous items, wherein the second augmentation data further comprises segmented enamel data, segmented dentin data and segmented pulp data.

34. The method of any of the previous items, wherein the first view and the second view are displayed in a side-by-side view in the GUI.

35. The method of any of items 1-33, wherein the second view is overlayed or superimposed on the first view.

36. The method of any of items 1-33, wherein the first view is overlayed or superimposed on the second view.

37. The method of any of the preceding items, wherein the part of the first data corresponding to the desired inspection site comprises a first part of a tooth, and the part of the second data corresponding to the desired inspection site comprises a second part of the tooth.

38. The method of item 37, wherein the second part of the tooth is encompassed in the first part of the tooth.

39. The method of any of items 37 or 38, wherein the first part of the tooth is the same as the second part of the tooth.

40. The method of any of the preceding items, wherein the part of the first data corresponding to the desired inspection site comprises a first part of a quadrant and the part of the second data corresponding to the desired inspection site comprises a second part of the quadrant.

41. The method of item 40, wherein the second part of the quadrant is encompassed in the first part of the quadrant.

42. The method of any of items 40 or 41, wherein the first part of the quadrant is the same as the second part of the quadrant.

43. The method of any of the preceding items, wherein the part of the first data corresponding to the desired inspection site comprises a first group of teeth, and the part of the second data corresponding to the desired inspection site comprises a second group of teeth.

44. The method of item 43, wherein the second group of teeth is comprised in the first group of teeth.

45. The method of any of items 43 or 45, wherein the second group of teeth is the same as the first group of teeth.

46. The method of any of the preceding items, wherein the part of the first data corresponding to the desired inspection site comprises a first part of a jaw, and the part of the second data corresponding to the inspection site comprises a second part of the jaw.

47. The method of item 46, wherein the second part of the jaw is encompassed in the first part of the jaw.

48. The method of any of items 46 or 47, wherein the second part of the jaw is the same as the first part of the jaw.

49. The method according to any of the preceding items, wherein the first view and the second view are synchronized, whereby a user input indicative of an updated desired inspection site results in an updated first view and updated second view.

50. The method of any of the preceding items, further comprising rendering in the GUI one of either the first data or the second data, wherein the user input comprises clicking or hovering on the desired inspection site in the graphical rendering.

51. The method of any of the preceding items, further comprising determining a spatial relationship between at least a part of the first data and at least a part of the second data.

52. The method of item 51, wherein determining the spatial relationship comprises identifying a location of the at least a part of the second data with respect to the at least a part of the first data.

53. The method of item 52, wherein the location comprises a position and an orientation of the at least a part of the second data relative to the at least a part of the first data.

54. The method of any of items 51-53, wherein determining the spatial relationship comprises using at least part of the first augmentation data and using at least part of the second augmentation data to determine that the at least a part of the first data and the at least a part of the second data represent a same part of the dental object.

55. The method of any of items 51-54, wherein the second data comprises one or more 2D X-ray images, and wherein determining the spatial relationship between the at least a part of the first data and the at least a part of the second data comprises:

- generating a 2D projection of the first data;
- estimating a pose of the at least a part of the first data relative to at least a part of the one or more 2D X-ray images by optimizing an agreement between the 2D projection of the first data and the one or more 2D X-ray image; and
- determining a transform defining the spatial correspondence relationship based on the estimated pose.

56. The method of item 55, wherein the 2D projection comprises a rendered silhouette or occluding contour of the first data in a viewing direction of the one or more 2D X-ray images, and wherein the optimizing comprises minimizing a contour distance between one or more geometric boundaries of the dental object extracted from the one or more 2D X-ray images and any of the rendered silhouette or occluding contour of the first data.

57. The method of any of items 55-56, further comprising determining one or more dental landmarks in the at least a part of the first data and determining the one or more landmarks in the at least a part of the one or more 2D X-ray images, and initializing the estimated pose using the one or more dental landmarks.

58. A program product comprising instructions which, when executed by a computer, cause the computer to perform the method steps described herein.

59. A non-volatile computer-readable medium comprising instructions which, when executed by a computer, cause the computer to perform the method according to any of the disclosed embodiments.

60. A system comprising:

- one or more memories;
- a communication interface configured to exchange data with one or more external systems;
- a graphical user interface (GUI);
- a processing device coupled to the memory, the processing device configured to:

    ◦ obtain first data representing a surface of a dental object, wherein the first data is three-dimensional (3D) surface data;
    ◦ obtaining first augmentation data indicating an estimated presence of a first set of dental conditions in the first data;

○ obtain second data representing an internal volume of the dental object;

○ obtaining second augmentation data indicating an estimated presence of a second set of dental conditions in the second data;

○ determining a spatial relationship between at least a part of the first data and at least a part of the second data using at least part of the first augmentation data and at least part of the second augmentation data;

○ obtain a user input indicative of a desired inspection site of the dental object;

○ determine a part of the first data corresponding to the desired inspection site;

○ determine a part of the second data corresponding to the desired inspection site;

○ render, in the GUI, a first view comprising the part of the first data corresponding to the desired inspection site with a visual representation of at least a part of the first augmentation data corresponding to the desired inspection site; and

○ render, in the GUI, a second view comprising the part of the second data corresponding to the desired inspection site with a visual representation of at least a part of the second augmentation data corresponding to the desired inspection site,

wherein the first view and the second view are bidirectionally synchronized based on the determined spatial relationship between the at least a part of the first data and the at least a part of the second data, whereby a user input indicative of an updated desired inspection site results in an updated first view and an updated second view.

61. A computer-implemented method comprising the steps of:

- obtaining first data representing a surface of a patient's dental object, wherein the first data is three-dimensional (3D) surface data;
- obtaining first augmentation data indicating an estimated presence of a first set of dental conditions in the first data;
- obtaining second data representing an internal volume of the patient's dental object;
- obtaining second augmentation data indicating an estimated presence of a second set of dental conditions in the second data;
- obtaining one or more audio files comprising one or more of a recording of a discussion about a health status of the patient's dental object and/or a recording about a set of desired aesthetic features of the patient's dental object;
- automatically filling-in a dental chart of the patient, the dental chart comprising information about the dental object based on the first data, the first augmentation data, the second data, the second augmentation data and/or the one or more audio files.

62. The method according to item 61, wherein automatically filling-in the dental chart of the dental object further comprises processing, by using one or more trained machine learning models, the first data, the first augmentation data, the second data, the second augmentation data, and/or the one or more audio files.

63. The method according to item 62, wherein each of the one or more trained machine learning models is configured to generate an output comprising one or more treatment recommendations and/or one or more treatment plans for the dental object.

64. The method according to item 63, wherein the dental chart further comprises information about the dental object based on the output of each of the one or more trained machine learning models.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It is to be noted that the word "comprising" does not necessarily exclude the presence of other elements or steps than those listed. It is to be noted that the words "a" or "an" preceding an element do not exclude the presence of a plurality of such elements.

It should further be noted that any reference signs do not limit the scope of the claims, that the exemplary embodiments may be implemented at least in part by means of both hardware and software, and that several "means", "units" or "devices" may be represented by the same item of hardware.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

Although embodiments and features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications, and equivalents.

## Claims

1. A computer-implemented method comprising the steps of:

    • obtaining first data representing a surface of a dental object, wherein the first data is three-dimensional (3D) surface data;
    • obtaining first augmentation data indicating an estimated presence of a first set of dental conditions in the first data;
    • obtaining second data representing an internal volume of the dental object;
    • obtaining second augmentation data indicating an estimated presence of a second set of dental conditions in the second data;
    • determining a spatial relationship between at least a part of the first data and at least a part of the second data using at least part of the first augmentation data and at least part of the second augmentation data;
    • obtaining a user input indicative of a desired inspection site of the dental object;
    • determining a part of the first data corresponding to the desired inspection site;
    • determining a part of the second data corresponding to the desired inspection site;
    • rendering, in a graphical-user interface (GUI), a first view comprising the part of the first data corresponding to the desired inspection site with a visual indication of at least a part of the first augmentation data corresponding to the desired inspection site; and
    • rendering, in the GUI, a second view comprising the part of the second data corresponding to the desired inspection site with a visual indication of at least a part of the second augmentation data corresponding to the desired inspection site,

    wherein the first view and the second view are bidirectionally synchronized based on the determined spatial relationship between the at least a part of the first data and the at least a part of the second data, whereby a user input indicative of an updated desired inspection site results in an updated first view and an updated second view.

2. The method of claim 1, wherein the second data is one or more two-dimensional (2D) images of the dental object, and wherein the one or more 2D images are one or more 2D X-ray images.

3. The method of any of the preceding claims, wherein the second data is 3D data, and the 3D data is one or more 3D Cone Beam Computed Tomography (CBCT) images of the dental object.

4. The method of any of the preceding claims, wherein the first augmentation data further comprises segmented tooth surface data and segmented gingiva surface data.

5. The method of any of the preceding claims, wherein the second augmentation data further comprises segmented tooth volume data and segmented periodontal volume data.

6. The method of any of the preceding claims, wherein the second augmentation data further comprises segmented enamel data, segmented dentin data and segmented pulp data.

7. The method of any of the preceding claims, wherein the first set of dental conditions comprises one or more of caries, plaque, tooth crack, gum recession, tooth wear and gum inflammation.

8. The method of any of the preceding claims, wherein the second set of dental conditions comprises one or more of proximal caries, calculus and/or periapical radiolucency.

9. The method of any of the preceding claims, wherein at least a part of the first augmentation data is obtained upon processing the first data using a trained model for each dental condition in the first set of dental conditions, and wherein the trained model for each dental condition in the first set of dental conditions is configured to receive the first data as an input and to generate an output comprising a probability that the corresponding dental condition is present in the first data.

10. The method of any of the preceding claims, wherein at least a part of the second augmentation data is obtained upon processing the second data using a trained model for each dental condition in the second set of dental conditions, and wherein the trained model for each dental condition in the second set of dental conditions is configured to receive the second data as an input and to generate an output comprising a probability that the corresponding dental condition is present in the second data.

11. The method of any of the preceding claims, wherein at least a part of the first augmentation data and at least a part of the second augmentation data are obtained upon processing the first data and the second data using a trained bimodal model, and wherein the trained bimodal model is configured to receive the first data and the second data as an input and to generate an output comprising a probability that the first set of dental conditions and the second set of dental conditions are present in the dental object.

12. The method of any of the preceding claims, wherein the first view and the second view are displayed in a side-by-side view in the GUI.

13. The method of any of the preceding claims, wherein the part of the first data corresponding to the desired inspection site comprises a first group of teeth, and the part of the second data corresponding to the desired inspection site comprises a second group of teeth and wherein the second group of teeth is comprised in the first group of teeth or the second group of teeth is the same as the first group of teeth.

14. A non-volatile computer-readable medium comprising instructions which, when executed by a computer, cause the computer to perform the method according to any of the disclosed embodiments.

15. A system comprising:

- a display configured for outputting a graphical user interface (GUI);
- a processing device coupled to the display, the processing device configured to:

  ◦ obtain first data representing a surface of a dental object, wherein the first data is three-dimensional (3D) surface data;
  ◦ obtaining first augmentation data indicating an estimated presence of a first set of dental conditions in the first data;
  ◦ obtain second data representing an internal volume of the dental object;
  ◦ obtaining second augmentation data indicating an estimated presence of a second set of dental conditions in the second data;
  ◦ determining a spatial relationship between at least a part of the first data and at least a part of the second data using at least part of the first augmentation data and at least part of the second augmentation data;
  ◦ obtain a user input indicative of a desired inspection site of the dental object;
  ◦ determine a part of the first data corresponding to the desired inspection site;
  ◦ determine a part of the second data corresponding to the desired inspection site;
  ◦ render, in the GUI, a first view comprising the part of the first data corresponding to the desired inspection site with a visual representation of at least a part of the first augmentation data corresponding to the desired inspection site; and
  ◦ render, in the GUI, a second view comprising the part of the second data corresponding to the desired inspection site with a visual representation of at least a part of the second augmentation data corresponding to the desired inspection site,

wherein the first view and the second view are bidirectionally synchronized based on the determined spatial relationship between the at least a part of the first data and the at least a part of the second data, whereby a user input indicative of an updated desired inspection site results in an updated first view and an updated second view.

100

101a

Obtaining first data representing a surface of a dental object, wherein the first data is three-dimensional (3D) surface data.

101b

Obtaining first augmentation data indicating an estimated presence of a first set of dental conditions in the first data.

102a

Obtaining second data representing an internal volume of the dental object.

102b

Obtaining second augmentation data indicating an estimated presence of a second set of dental conditions in the second data.

103

Obtaining a user input indicative of a desired inspection site of the dental object.

104

Determining a part of the first data corresponding to the desired inspection site and determining a part of the second data corresponding to the desired inspection site.

105

Rendering, in a graphical-user interface (GUI), a first view comprising the part of the first data corresponding to the desired inspection site with a visual representation of at least a part of the first augmentation data corresponding to the desired inspection site.

106

Rendering, in the GUI, a second view comprising the part of the second data corresponding to the desired inspection site with a visual representation of at least a part of the second augmentation data corresponding to the desired inspection site.

*Fig. 1a*

*Fig. 1b*

X-ray device 202

CBCT device 203

Storage unit(s)

*Fig. 2*

Fig. 3

Fig. 4

*Fig. 5a*

*Fig. 5b*

*Fig. 5c*

600

X-ray/CBCT
601

605

606

608

Patient management system
609

Clinical notes
Patient data
602

Intraoral scan data
603

AI Model modules
607

AI module 1
607'

AI module 2
607''

· 607'''

AI module N

Other relevant patient data
604

610

609

606

Fig. 6a

*Fig. 6b*

700

Computer system
205, 605

Processor(s)
701

Graphic
Processing Unit
(GPU)
702

Memory
703

Storage
704

First data (first
augmentation data)
705

Second data
(second
augmentation data)
705'

Dental conditions detection
programs
706

Data receipt module
707

Machine learning modules
708

Rendering module
709

Display module
710

Communication interface
711

Imaging Device
712

Image data
713

Image data

Network
714

Display device
206

Visualization
representation
output

Graphical User
interface
715

*Fig. 7*

Europäisches
Patentamt

European
Patent Office

Office européen
des brevets

**EUROPEAN SEARCH REPORT**

Application Number

EP 26 15 4952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 883 259 B2 (ALIGN TECHNOLOGY INC [US]) 30 January 2024 (2024-01-30) | 1-10, 12-15 | INV. G06T7/00 |
| Y | * the whole document * <br> * claims 9,14, 17; figures 1A, 1B, 17, 39, 40 * <br> ----- | 11 | |
| Y | US 2024/312605 A1 (FARKASH SHAI [IL] ET AL) 19 September 2024 (2024-09-19) <br> * paragraphs [0050], [0059], [0088] * <br> ----- | 11 | |

TECHNICAL FIELDS
SEARCHED     (IPC)

G06T

The present search report has been drawn up for all claims

| Place of search | Date of completion of the search | Examiner |
|---|---|---|
| Munich | 15 May 2026 | Frias Velazquez, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ...........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 26 15 4952

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2026

| Patent document cited in search report | | Publication date | Patent family member(s) | | Publication date |
|---|---|---|---|---|---|
| US 11883259 | B2 | 30-01-2024 | US | 2019269485 A1 | 05-09-2019 |
| | | | US | 2020188068 A1 | 18-06-2020 |
| | | | US | 2020205943 A1 | 02-07-2020 |
| | | | US | 2021128282 A1 | 06-05-2021 |
| | | | US | 2023240819 A1 | 03-08-2023 |
| | | | US | 2024115361 A1 | 11-04-2024 |
| | | | US | 2025000623 A1 | 02-01-2025 |
| | | | US | 2025041030 A1 | 06-02-2025 |
| | | | US | 2025090285 A1 | 20-03-2025 |
| | | | US | 2025339245 A1 | 06-11-2025 |
| US 2024312605 | A1 | 19-09-2024 | US | 2022189611 A1 | 16-06-2022 |
| | | | US | 2024312605 A1 | 19-09-2024 |
| | | | US | 2025384992 A1 | 18-12-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2442720 B1